(19) Europäisches Patentamt
European Patent Office
Office européen des brevets

(11) EP 4 498 626 A1

(12) EUROPEAN PATENT APPLICATION
published in accordance with Art. 153(4) EPC

(43) Date of publication:
29.01.2025 Bulletin 2025/05

(21) Application number: 23784221.6

(22) Date of filing: 31.03.2023

(51) International Patent Classification (IPC):
H04L 5/00 (2006.01)

(52) Cooperative Patent Classification (CPC):
G06N 3/04; G06N 3/08; H04L 5/00; H04W 72/044;
H04W 72/52; H04W 74/08

(86) International application number:
PCT/CN2023/085396

(87) International publication number:
WO 2023/193657 (12.10.2023 Gazette 2023/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.04.2022 CN 202210356208

(71) Applicant: Huawei Technologies Co., Ltd.
Shenzhen, Guangdong 518129 (CN)

(72) Inventors:
• GUO, Ziyang
Shenzhen, Guangdong 518129 (CN)

• LIU, Peng
Shenzhen, Guangdong 518129 (CN)
• YANG, Xun
Shenzhen, Guangdong 518129 (CN)
• LUO, Jiajun
Shenzhen, Guangdong 518129 (CN)
• SHU, Tongxin
Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) INFORMATION EXCHANGE METHOD AND RELATED APPARATUS

(57) This application relates to an information exchange method and a related apparatus. The method includes: A resource-limited node (for example, a STA) requests to enable an AI-assisted channel aggregation function, and after agreeing to the request, a node with a more powerful function (for example, an AP) sends, to the STA, related information of a trained neural network (for example, a structure, a parameter, an input, and an output of the neural network), so that the STA determines the neural network based on the related information, and performs inference and decision-making based on data observed by the STA, to obtain a channel aggregation decision result. According to embodiments of this application, a basis can be provided for the resource-limited node to implement AI-assisted channel aggregation, and performance can be further improved. This application is applied to a system supporting a next-generation Wi-Fi protocol of 802.11ax, for example, 802.11be, Wi-Fi 7, or EHT, and a next-generation Wi-Fi protocol of 802.11be, for example, Wi-Fi 8.

| AP | | STA |
|---|---|---|
| S1: Send a function request frame, where the function request frame includes function request information, and the function request information is used to request to enable an AI-assisted channel aggregation function, an AI-assisted channel aggregation joint channel access function, or an AI-assisted channel access function | | |
| S2: Reply with a function response frame, where the function response frame includes function response information, and the function response information indicates that a request of the STA is agreed or rejected | | |
| S3: Send an input information indication frame, where the frame indicates input information of a neural network, and is further used to determine an input layer structure of the neural network | | |
| S4: Acknowledge the input information, for example, reply with an ACK or a BA | | |
| S5: Send an output information indication frame, where the frame is used to determine at least one of an output layer structure of the neural network and a manner of selecting a decision result of the neural network | | |
| S6: Acknowledge the output information, for example, reply with an ACK or a BA | | |
| S7: Deliver a parameter of the neural network | | |
| | | S8: Perform inference based on the received parameter of the neural network and data observed by the STA and corresponding to the input information to obtain a channel aggregation decision result, a channel aggregation joint channel access decision result, or a channel access decision result |

FIG. 19

EP 4 498 626 A1

## Description

This application claims priority to Chinese Patent Application No. 202210356208.1, filed with the China National Intellectual Property Administration on April 6, 2022 and entitled "INFORMATION EXCHANGE METHOD AND RELATED APPARATUS", which is incorporated herein by reference in its entirety.

## TECHNICAL FIELD

This application relates to the field of wireless communication technologies, and in particular, to an information exchange method and a related apparatus.

## BACKGROUND

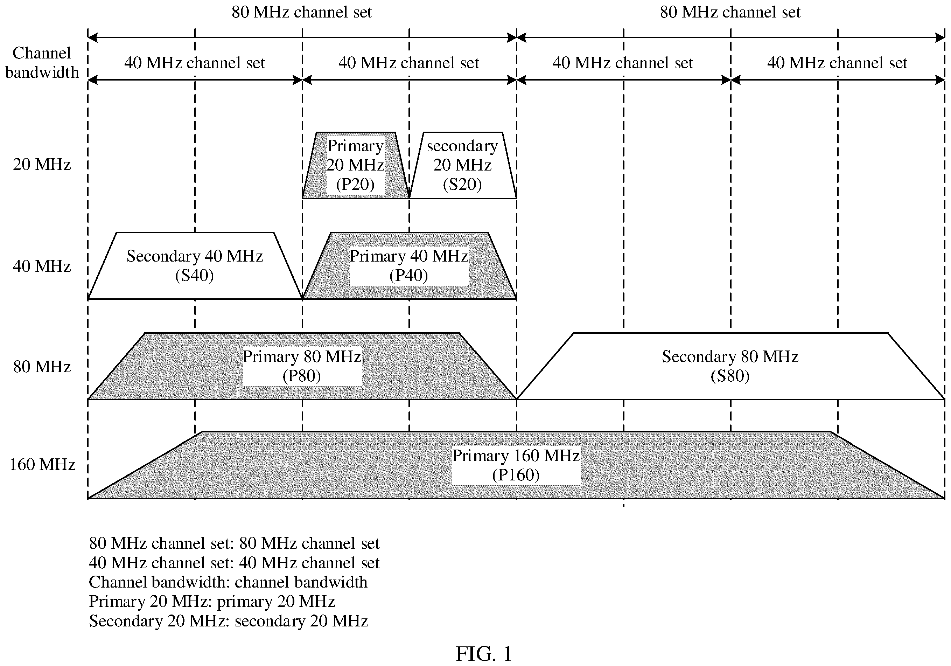

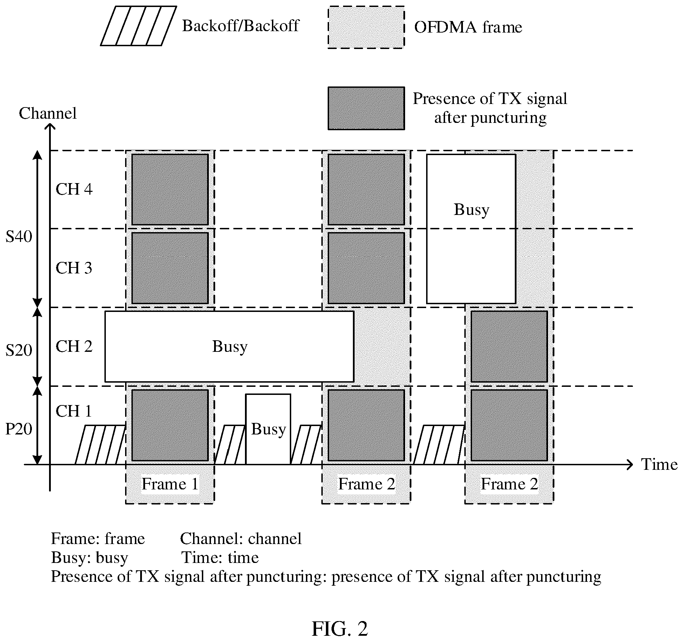

In the 802.11ac standard, a concept of channel aggregation is introduced for the first time. A 20 MHz primary channel (primary channel) and a plurality of adjacent 20 MHz secondary channels (secondary channels) are allowed be aggregated into a channel with a bandwidth of 40 MHz, 80 MHz, or 160 MHz for transmission, to improve transmission efficiency. FIG. 1 is a diagram of aggregation of a plurality of adjacent channels. In a next-generation standard of the 802.11ac standard, that is, the 802.11ax standard, based on technologies such as preamble puncturing (preamble puncturing), channel aggregation is allowed to be performed between non-adjacent 20 MHz channels. This provides more flexibility for channel aggregation, and also brings more possibilities for further improving a transmission throughput. FIG. 2 is a diagram of preamble puncturing-based transmission. Transmission bandwidths of a frame 1 (frame 1), a frame 2 (frame 2), and a frame 3 (frame 3) are all 80 MHz. However, because a secondary 20 MHz channel (denoted as S20) is busy (busy) when the frame 1 is transmitted, S20 is punctured. Therefore, an actual bandwidth of the frame 1 is 60 MHz. Similarly, an actual bandwidth of the frame 2 is 60 MHz, and an actual bandwidth of the frame 3 is 40 MHz.

Conventional channel aggregation methods are mainly classified into static (static) and dynamic (dynamic) aggregation methods. A main idea of static aggregation is as follows: On a premise that a primary channel is idle, channel aggregation can be performed only after a secondary channel is also idle. A main idea of dynamic aggregation is as follows: When a primary channel is idle, if a secondary channel is also just idle, channel aggregation can be performed. This method is more flexible than static aggregation. A representative algorithm of dynamic aggregation is AlwaysMax (the AlwaysMax is to aggregate all idle channels). However, the conventional channel aggregation methods still have problems such as a high collision rate of packet transmission between stations (stations, STAs) after aggregation, poor adaptability, and poor throughput, delay, and jitter performance due to inability to dynamically adjust a number of aggregated channels and a bandwidth based on busy/idle of each channel and a service requirement.

With development of artificial intelligence (artificial intelligence, AI) technologies, an AI-based channel aggregation algorithm can make full use of an AI prediction capability, and can make a most effective decision (for example, which channels are aggregated and how many channels are aggregated) based on a real-time status of a channel and a transmission service requirement. In this way, transmission performance (a throughput, a delay, jitter, and the like) is greatly improved. However, neural network training requires large computing power and energy consumption, and it is difficult for resource-limited nodes (for example, a mobile device, where the mobile device is usually powered by a battery) in a network to complete neural network training by themselves. Therefore, these resource-limited nodes cannot improve performance according to an AI-based channel aggregation method.

## SUMMARY

Embodiments of this application provide an information exchange method and a related apparatus, so that a resource-limited node (for example, a station) in a network can obtain related information of a neural network (for example, a function, a structure, a parameter, an input, and an output of the neural network) trained by a node with a more powerful function (for example, an access point) in the network. This provides a basis for the resource-limited node to implement AI-assisted channel aggregation, AI-assisted channel access, or AI-assisted channel aggregation joint channel access. Further, the resource-limited node in the network may perform AI-assisted channel aggregation or channel access or channel aggregation joint channel access by using the neural network trained by the node with the more powerful function in the network, to improve performance.

The following describes this application from different aspects. It should be understood that for the following implementations and beneficial effects of the different aspects, refer to each other.

According to a first aspect, this application provides an information exchange method. The method includes: A first communication apparatus sends function request information, where the function request information is used to request to enable an AI-assisted channel aggregation function, an AI-assisted channel aggregation joint channel access function, or an AI-assisted channel access function. Then, the first communication apparatus receives a function response information, where the function response information is used to respond to a request of the function request information.

The first communication apparatus in this application requests the second communication apparatus to enable the AI-assisted channel aggregation function, the AI-assisted channel aggregation joint channel access function, or the AI-assisted channel access function, and the second communication apparatus replies with the corresponding function response information, so that the first communication apparatus determines, based on the function response information, whether to enable the requested function. This can provide a basis for the first communication apparatus to implement AI-assisted channel aggregation, AI-assisted channel aggregation joint channel access, or AI-assisted channel access.

"AI-assisted channel aggregation" in this application may also be understood as AI-assisted combination of multiple resource units (Multiple RUs), that is, an AI method is used to determine resource units (resource units, RUs) to be used.

AI-assisted channel access in this application may be understood as a special case of AI-assisted channel aggregation joint channel access. In other words, AI-assisted channel access is a case in which a number of aggregated channels is 1 in AI-assisted channel aggregation joint channel access. Therefore, the function request information may be used to request to enable the AI-assisted channel aggregation function or the AI-assisted channel aggregation joint channel access function.

With reference to the first aspect, in a possible implementation, the function response information indicates that the request of the function request information is agreed. After the first communication apparatus receives the function response information, the method further includes: The first communication apparatus receives a first frame, where the first frame includes first indication information, the first indication information indicates input information of a neural network, and the neural network corresponds to the function that is requested to be enabled by the function request information.

With reference to the first aspect, in a possible implementation, the function response information indicates that the request of the function request information is agreed. After the first communication apparatus receives the function response information, the method further includes: The first communication apparatus receives a second frame, where the second frame includes third indication information, the third indication information indicates at least one of an output layer structure of the neural network and a manner of selecting a decision result of the neural network, and the neural network corresponds to the function that is requested to be enabled by the function request information.

Optionally, the output layer structure of the neural network includes one or more of the following: a number of neurons, or an activation function used by a neuron.

It should be understood that the neural network in this application includes an input layer, an output layer, and a hidden layer. The input layer may be determined based on the foregoing input information. For details, refer to descriptions in the following embodiments. Details are not described herein. The hidden layer may be preset.

"Predefine" and "preset" in this application may be understood as "define", "predefine", "store", "pre-store", "pre-negotiate", "pre-configure", "solidify", "pre-burn", or the like.

With reference to the first aspect, in a possible implementation, the function response information indicates that the request of the function request information is agreed. After the first communication apparatus receives the function response information, the method further includes: The first communication apparatus receives a parameter of the neural network, where the parameter of the neural network includes at least one of a bias and a weight of a neuron, and the neural network corresponds to the function that is requested to be enabled by the function request information.

With reference to the first aspect, in a possible implementation, the function response information indicates that the request of the function request information is rejected. After the first communication apparatus receives the function response information, the method further includes: The first communication apparatus performs communication in a conventional channel aggregation mode and conventional channel access. Conventional channel aggregation includes but is not limited to two types of methods: static aggregation and dynamic aggregation, for example, an AlwaysMax algorithm. For specific implementation of the algorithm, refer to the conventional technology. Conventional channel access includes but is not limited to carrier sense multiple access with collision avoidance (carrier sense multiple access with collision avoidance, CSMA/CA).

In this application, the neural network corresponds to an AI-assisted related function, or the neural network is configured to implement or support an AI-assisted related function. It may be understood that the neural network in this application may be obtained through training by another communication apparatus (which is a communication apparatus other than the first communication apparatus in a network, for example, the second communication apparatus), so that the another communication apparatus can implement or support the AI-assisted related function. The AI-assisted related function includes one or more of the following: the AI-assisted channel access function, the AI-assisted channel aggregation function, or the AI-assisted channel aggregation joint channel access function. Optionally, the AI-assisted related function may further include one or more of the following: an AI-assisted rate adaptation function or an AI-assisted rate adaptation joint channel access function.

According to a second aspect, this application provides an information exchange method. The method includes: A second communication apparatus receives function request information, where the function request information is used to request to enable an AI-assisted channel aggregation function, an AI-assisted channel aggregation joint channel access function, or an AI-assisted channel access function. Then, the second communication apparatus sends function response information, where the function response information is used to respond to (that is, agree with or reject) a request of the function request information.

With reference to the second aspect, in a possible implementation, the function response information indicates that the request of the function request information is agreed. After the second communication apparatus sends the function response information, the method further includes: The second communication apparatus sends a first frame, where the first frame includes first indication information, the first indication information indicates input information of a neural network, and the neural network corresponds to the function that is requested to be enabled by the function request information.

With reference to the second aspect, in a possible implementation, the function response information indicates that the request of the function request information is agreed. After the second communication apparatus sends the function response information, the method further includes: The second communication apparatus sends a second frame, where the second frame includes third indication information, the third indication information indicates at least one of an output layer structure of the neural network and a manner of selecting a decision result of the neural network, and the neural network corresponds to the function that is requested to be enabled by the function request information.

Optionally, the output layer structure of the neural network includes one or more of the following: a number of neurons, or an activation function used by a neuron.

The number of neurons at an output layer may be determined based on one or more of the function, an aggregation capability of a first communication apparatus (whether preamble puncturing is supported), or a maximum number of channels allowed for channel aggregation by a first communication apparatus. For example, (1) If the AI-assisted channel aggregation function is requested, the number of neurons at the output layer may be obtained based on the aggregation capability and the maximum number of channels allowed for channel aggregation. (2) If the AI-assisted channel access function is requested, the number of neurons at the output layer is 2. (3) If the AI-assisted channel aggregation joint channel access function is requested, the number of neurons at the output layer is a total aggregation mode obtained based on the aggregation capability and the maximum number of channels allowed for channel aggregation plus 1.

With reference to the second aspect, in a possible implementation, the function response information indicates that the request of the function request information is agreed. After the second communication apparatus sends the function response information, the method further includes: The second communication apparatus sends a parameter of the neural network, where the parameter of the neural network includes at least one of a bias and a weight of a neuron, and the neural network corresponds to the function that is requested to be enabled by the function request information.

In this application, when the second communication apparatus agrees to the request of the first communication apparatus, the second communication apparatus notifies the first communication apparatus of related information of the neural network trained by the second communication apparatus, for example, the input information, the output layer structure, or the parameter of the neural network, so that the first communication apparatus can restore the neural network based on the information. In addition, this may provide a basis for the first communication apparatus to perform AI-assisted channel aggregation, AI-assisted channel aggregation joint channel access, or AI-assisted channel access by using the neural network.

In a possible implementation of any one of the foregoing aspects, the function request information is carried in an information element, or carried in an aggregated control (A-control) subfield of a high throughput (high throughput, HT) control field.

In a possible implementation of any one of the foregoing aspects, if the function request information is used to request to enable a function related to channel aggregation (for example, the AI-assisted channel aggregation function or the AI-assisted channel aggregation joint channel access function), the function request information may further include fourth indication information, where the fourth indication information indicates the maximum number of channels allowed for channel aggregation by the first communication apparatus. The maximum number of channels allowed for channel aggregation by the first communication apparatus may be determined based on a maximum channel bandwidth supported by the first communication apparatus. For example, it assumed that the maximum channel bandwidth of the first communication apparatus is 80 MHz (for a channel division manner, refer to an existing standard, for example, the 802.11be standard or the 802.11ax standard; and in this application, subchannels are obtained through division at a granularity of a 20 MHz bandwidth). In this case, the maximum number of channels allowed for channel aggregation by the first communication apparatus is less than or equal to 4. In other words, the number indicated by the fourth indication information should be less than or equal to 4, for example, any one of values 1, 2, 3, and 4.

In a possible implementation of any one of the foregoing aspects, if the function request information is used to request to enable the function related to channel aggregation (for example, the AI-assisted channel aggregation function or the AI-assisted channel aggregation joint channel access function), the function request information may further include fifth indication information, where the fifth indication information indicates whether the first communication apparatus supports preamble puncturing.

In a possible implementation of any one of the foregoing aspects, when the function response information indicates that the request of the function request information is agreed, the function response information may further include the parameter of the neural network. The parameter of the neural network includes at least one of the bias and the weight of the neuron. The neural network corresponds to the function that is requested to be enabled by the function request information.

In a possible implementation of any one of the foregoing aspects, when the function response information indicates that the request of the function request information is agreed, the function response information may further include sixth indication information, where the sixth indication information indicates a hidden layer structure of the neural network. The neural network corresponds to the function that is requested to be enabled by the function request information.

In this application, the hidden layer structure is indicated, so that the hidden layer structure of the neural network can be more flexibly designed.

In a possible implementation of any one of the foregoing aspects, the input information of the neural network includes one or more of the following: a carrier sense result, a queuing delay, an access delay, a channel aggregation status, channel access behavior, a data packet transmission result, duration of the carrier sense result, duration of channel aggregation, or duration of the channel access behavior.

Optionally, the input information of the neural network further includes one or more of the following: a packet loss rate, a throughput, duration from a current moment to a moment of last successful transmission of the first communication apparatus, duration from the current moment to a moment of last successful transmission of another communication apparatus on a channel, load information of the first communication apparatus, or load information of the another communication apparatus on the channel. The another communication apparatus herein is a communication apparatus other than the first communication apparatus.

For example, when the neural network corresponds to the AI-assisted channel aggregation function, the input information of the neural network includes but is not limited to one or more of the following: the carrier sense result, the channel aggregation status, the data packet transmission result, the duration of the carrier sense result, or the duration of channel aggregation. Optionally, the input information of the neural network further includes but is not limited to one or more of the following: the packet loss rate, the duration from the current moment to the moment of last successful transmission of this communication apparatus, the duration from the current moment to the moment of last successful transmission of the another communication apparatus on the channel, the load information of this communication apparatus, or the load information of the another communication apparatus on the channel. This communication apparatus herein is the first communication apparatus.

Correspondingly, the decision result of the neural network includes but is not limited to one or more of the following: whether to perform channel aggregation, which channels are aggregated, or how many channels are aggregated.

For example, when the neural network corresponds to the AI-assisted channel aggregation joint channel access function, the input information of the neural network is but is not limited to one or more of the following: the carrier sense result, the channel aggregation status, the channel access behavior, the data packet transmission result, the duration of the carrier sense result, the duration of channel aggregation, or the duration of the channel access behavior. Optionally, the input information of the neural network further includes but is not limited to one or more of the following: the packet loss rate, the throughput, the duration from the current moment to the moment of last successful transmission of this communication apparatus, the duration from the current moment to the moment of last successful transmission of the another communication apparatus on the channel, the load information of this communication apparatus, or the load information of the another communication apparatus on the channel. This communication apparatus herein is the first communication apparatus.

Correspondingly, the decision result of the neural network includes but is not limited to one or more of the following: whether to perform channel aggregation and whether to perform access, which channels are aggregated and whether to perform access, or how many channels are aggregated and whether to perform access.

For example, when the neural network corresponds to the AI-assisted channel access function, the input information of the neural network includes but is not limited to one or more of the following: the carrier sense result, the queuing delay, the access delay, the channel access behavior, the data packet transmission result, the duration of the carrier sense result, or the duration of the channel access behavior. Optionally, the input information of the neural network further includes but is not limited to one or more of the following: the packet loss rate, the throughput, the duration from the current moment to the moment of last successful transmission of this communication apparatus, or the duration from the current moment to the moment of last successful transmission of the another communication apparatus on the channel.

Correspondingly, the decision result of the neural network includes whether to access.

It should be understood that when the neural network corresponds to different functions, content of the input information and the decision result is also applicable to another aspect. Details are not described again in the another aspect.

In a possible implementation of any one of the foregoing aspects, the first frame further includes second indication information, where the second indication information indicates a number of pieces of input information of the neural network, or indicates a number or a length of the input information of the neural network within predetermined duration.

In a possible implementation of any one of the foregoing aspects, the first frame further includes information indicating a dimension of the input information, where the information is denoted as information A. The information A may also be understood as indicating a number of neurons corresponding to the input information. The dimension of the input information may be equal to the number of neurons corresponding to the input information.

In a possible implementation of any one of the foregoing aspects, the first frame further includes information B indicating whether the first indication information exists.

According to a third aspect, this application provides a first communication apparatus, including a transceiver unit and a processing unit. The processing unit is configured to control the transceiver unit to perform the following steps: sending function request information and receiving function response information. The function request information is used to request to enable an AI-assisted channel aggregation function, an AI-assisted channel aggregation joint channel access function, or an AI-assisted channel access function. The function response information is used to respond to a request of the function request information.

With reference to the third aspect, in a possible implementation, the function response information indicates that the request of the function request information is agreed. The transceiver unit is further configured to receive a first frame, where the first frame includes first indication information, the first indication information indicates input information of a neural network, and the neural network corresponds to the function that is requested to be enabled by the function request information.

With reference to the third aspect, in a possible implementation, the function response information indicates that the request of the function request information is agreed. The transceiver unit is further configured to receive a second frame, where the second frame includes third indication information, and the third indication information indicates at least one of an output layer structure of the neural network and a manner of selecting a decision result of the neural network. The neural network corresponds to the function that is requested to be enabled by the function request information.

With reference to the third aspect, in a possible implementation, the function response information indicates that the request of the function request information is agreed. The transceiver unit is further configured to receive a parameter of the neural network, where the parameter of the neural network includes at least one of a bias and a weight of a neuron, and the neural network corresponds to the function that is requested to be enabled by the function request information.

It should be understood that for specific descriptions of the function request information, the function response information, the first frame, the second frame, the parameter of the neural network, and the like, refer to the first aspect or the second aspect. Details are not described herein again.

According to a fourth aspect, this application provides a second communication apparatus, including a transceiver unit and a processing unit. The processing unit is configured to control the transceiver unit to perform the following steps: receiving function request information and sending function response information. The function request information is used to request to enable an AI-assisted channel aggregation function, an AI-assisted channel aggregation joint channel access function, or an AI-assisted channel access function. The function response information is used to respond to (that is, agree with or reject) a request of the function request information.

With reference to the fourth aspect, in a possible implementation, the function response information indicates that the request of the function request information is agreed. The transceiver unit is further configured to send a first frame, where the first frame includes first indication information, the first indication information indicates input information of a neural network, and the neural network corresponds to the function that is requested to be enabled by the function request information.

With reference to the fourth aspect, in a possible implementation, the function response information indicates that the request of the function request information is agreed. The transceiver unit is further configured to send a second frame, where the second frame includes third indication information, the third indication information indicates at least one of an output layer structure of the neural network and a manner of selecting a decision result of the neural network, and the neural network corresponds to the function that is requested to be enabled by the function request information.

With reference to the fourth aspect, in a possible implementation, the function response information indicates that the request of the function request information is agreed. The transceiver unit is further configured to send a parameter of the neural network, where the parameter of the neural network includes at least one of a bias and a weight of a neuron, and the neural network corresponds to the function that is requested to be enabled by the function request information.

It should be understood that for specific descriptions of the function request information, the function response information, the first frame, the second frame, the parameter of the neural network, and the like, refer to the first aspect or the second aspect. Details are not described herein again.

According to a fifth aspect, this application provides an information exchange method. The method includes: A second communication apparatus generates and sends a first frame, where the first frame includes first indication information, the first indication information indicates input information of a neural network, and the neural network corresponds to an AI-assisted channel aggregation function, an AI-assisted channel aggregation joint channel access function, or an AI-assisted channel access function.

When there is no request, the second communication apparatus in this application also notifies another node in a network of the input information of the neural network trained by the second communication apparatus. This can provide a basis for a resource-limited node in the network (for example, a first communication apparatus) to implement AI-assisted channel aggregation, AI-assisted channel aggregation joint channel access, or AI-assisted channel access.

With reference to the fifth aspect, in a possible implementation, the method further includes: The second communication apparatus sends a second frame, where the second frame includes third indication information, and the third indication information indicates at least one of an output layer structure of the neural network and a manner of selecting a decision result of the neural network.

Optionally, the output layer structure of the neural network includes one or more of the following: a number of neurons, or an activation function used by a neuron.

In this case, a hidden layer structure may be preset, or may be indicated in the first frame or the second frame. For details, refer to descriptions in the following embodiments.

With reference to the fifth aspect, in a possible implementation, the method further includes: The second communication apparatus sends a parameter of the neural network, where the parameter of the neural network includes at least one of a bias and a weight of a neuron.

According to a sixth aspect, this application provides an information exchange method. The method includes: A first communication apparatus receives a first frame, where the first frame includes first indication information, and the first indication information indicates input information of a neural network; and the first communication apparatus determines at least one of the input information of the neural network and an input layer structure of the neural network based on an indication of the first indication information in the first frame. The neural network corresponds to an AI-assisted channel aggregation function, an AI-assisted channel aggregation joint channel access function, or an AI-assisted channel access function.

The input layer structure of the neural network includes a number of neurons at an input layer. The number of neurons at the input layer may be determined based on a number of neurons corresponding to each type of input information in a plurality of types of input information indicated by the first indication information, a number of pieces of/length of the input information of the neural network, and a maximum number of channels allowed for channel aggregation by the first communication apparatus. For a specific determining manner, refer to descriptions in the following embodiments. Details are not described herein. The number of neurons corresponding to each type of input information and the number of pieces of/length of the input information of the neural network may be preset, or may be indicated in the first frame. For details, refer to descriptions in the following embodiments. Details are not described herein. The maximum number of channels allowed for channel aggregation by the first communication apparatus may be determined based on a maximum channel bandwidth. For details, refer to descriptions in the following embodiments. Details are not described herein.

With reference to the sixth aspect, in a possible implementation, the method further includes: The first communication apparatus receives a second frame, where the second frame includes third indication information, and the third indication information indicates at least one of an output layer structure of the neural network and a manner of selecting a decision result of the neural network.

Optionally, the output layer structure of the neural network includes one or more of the following: a number of neurons, or an activation function used by a neuron.

With reference to the sixth aspect, in a possible implementation, the method further includes: The first communication apparatus receives a parameter of the neural network, where the parameter of the neural network includes at least one of a bias and a weight of a neuron.

With reference to the fifth aspect or the sixth aspect, in a possible implementation, the input information of the neural network includes one or more of the following: a carrier sense result, a queuing delay, an access delay, a channel aggregation status, channel access behavior, a data packet transmission result, duration of the carrier sense result, duration of channel aggregation, or duration of the channel access behavior.

Optionally, the input information of the neural network further includes one or more of the following: a packet loss rate, a throughput, duration from a current moment to a moment of last successful transmission of the first communication apparatus, duration from the current moment to a moment of last successful transmission of another communication apparatus on a channel, load information of the first communication apparatus, or load information of the another communication apparatus on the channel. The another communication apparatus herein is a communication apparatus other than the first communication apparatus.

With reference to the fifth aspect or the sixth aspect, in a possible implementation, the first frame further includes second indication information, where the second indication information indicates a number of pieces of input information of the neural network, or indicates a number or a length of the input information of the neural network within predetermined duration.

With reference to the fifth aspect or the sixth aspect, in a possible implementation, the first frame further includes information indicating a dimension of the input information, where the information is denoted as information A. The information A may also be understood as indicating a number of neurons corresponding to the input information. The dimension of the input information may be equal to the number of neurons corresponding to the input information.

With reference to the fifth aspect or the sixth aspect, in a possible implementation, the first frame further includes information B indicating whether the first indication information exists.

According to a seventh aspect, this application provides a second communication apparatus, including a transceiver unit and a processing unit. The processing unit is configured to: generate a first frame, and send the first frame through the transceiver unit, where the first frame includes first indication information, the first indication information indicates input information of a neural network, and the neural network corresponds to an AI-assisted channel aggregation function, an AI-assisted channel aggregation joint channel access function, or an AI-assisted channel access function.

With reference to the seventh aspect, in a possible implementation, the transceiver unit is further configured to send a second frame, where the second frame includes third indication information, and the third indication information indicates at least one of an output layer structure of the neural network and a manner of selecting a decision result of the neural network.

With reference to the seventh aspect, in a possible implementation, the transceiver unit is further configured to send a parameter of the neural network, where the parameter of the neural network includes at least one of a bias and a weight of a neuron.

For example, the processing unit is further configured to: obtain at least one of the second frame or the parameter of the neural network; and send at least one of the second frame or the parameter of the neural network through the transceiver unit or the control the transceiver unit to send at least one of the second frame or the parameter of the neural network.

It should be understood that for specific descriptions of the first frame, the second frame, the parameter of the neural network, and the like, refer to the fifth aspect or the sixth aspect. Details are not described herein again.

According to an eighth aspect, this application provides a first communication apparatus, including a transceiver unit and a processing unit. The transceiver unit is configured to receive a first frame, where the first frame includes first indication information, and the first indication information indicates input information of a neural network. The processing unit is configured to determine at least one of the input information of the neural network and an input layer structure of the neural network based on an indication of the first indication information in the first frame. The neural network corresponds to an AI-assisted channel aggregation function, an AI-assisted channel aggregation joint channel access function, or an AI-assisted channel access function.

With reference to the eighth aspect, in a possible implementation, the transceiver unit is further configured to receive a second frame, where the second frame includes third indication information, and the third indication information indicates at least one of an output layer structure of the neural network and a manner of selecting a decision result of the neural network.

With reference to the eighth aspect, in a possible implementation, the transceiver unit is further configured to receive a parameter of the neural network, where the parameter of the neural network includes at least one of a bias and a weight of a neuron.

It should be understood that for specific descriptions of the first frame, the second frame, the parameter of the neural network, and the like, refer to the fifth aspect or the sixth aspect. Details are not described herein again.

According to a ninth aspect, this application provides an information exchange method. The method includes: A second communication apparatus generates and sends a second frame, where the second frame includes third indication information, and the third indication information indicates at least one of an output layer structure of a neural network and a manner of selecting a decision result of the neural network. The neural network corresponds to an AI-assisted channel aggregation function, an AI-assisted channel aggregation joint channel access function, or an AI-assisted channel access function.

In this case, a correspondence between an AI-assisted function and input information of the neural network is predefined, to indicate that one or more AI-assisted functions respectively correspond to which input information. An input layer structure may include a number of neurons at an input layer, and the number of neurons at the input layer may be determined based on a number of neurons corresponding to each type of input information, a number of pieces of/length of the input information of the neural network, and a maximum number of channels allowed for channel aggregation by a first communication apparatus. For a specific determining manner, refer to descriptions in the following embodiments. Details are not described herein. The number of neurons corresponding to each type of input information and the number of pieces of/length of the input information of the neural network may be preset or defined in a standard protocol. The maximum number of channels allowed for channel aggregation by the first communication apparatus may be determined based on a maximum channel bandwidth. For a specific determining manner, refer to descriptions in the following embodiments.

Details are not described herein.

A hidden layer structure of the neural network may be preset, or may be indicated in the second frame. For details, refer to descriptions in the following embodiments.

When there is no request, the second communication apparatus in this application also notifies another node in a network of at least one of the output layer structure of the neural network trained by the second communication apparatus or the manner of selecting the decision result. This can provide a basis for a resource-limited node in the network (for example, the first communication apparatus) to implement AI-assisted channel aggregation, AI-assisted channel aggregation joint channel access, or AI-assisted channel access.

With reference to the ninth aspect, in a possible implementation, the method further includes: The second communication apparatus sends a parameter of the neural network, where the parameter of the neural network includes at least one of a bias and a weight of a neuron.

According to a tenth aspect, this application provides an information exchange method. The method includes: A first communication apparatus receives a second frame, where the second frame includes third indication information, and the third indication information indicates at least one of an output layer structure of a neural network and a manner of selecting a decision result of the neural network; and the first communication apparatus determines, based on an indication of the third indication information in the second frame, at least one of the output layer structure of the neural network and the manner of selecting the decision result of the neural network. The neural network corresponds to an AI-assisted channel aggregation function, an AI-assisted channel aggregation joint channel access function, or an AI-assisted channel access function.

With reference to the tenth aspect, in a possible implementation, the method further includes: The first communication apparatus receives a parameter of the neural network, where the parameter of the neural network includes at least one of a bias and a weight of a neuron.

With reference to the ninth aspect or the tenth aspect, in a possible implementation, the output layer structure of the neural network includes one or more of the following: a number of neurons, or an activation function used by a neuron. For a manner of determining a number of neurons at an output layer, refer to the first aspect or the second aspect. Details are not described herein again.

According to an eleventh aspect, this application provides a second communication apparatus, including a transceiver unit and a processing unit. The processing unit is configured to generate a second frame, and send the second frame through the transceiver unit, where the second frame includes third indication information, and the third indication information indicates at least one of an output layer structure of a neural network and a manner of selecting a decision result of the neural network. The neural network corresponds to an AI-assisted channel aggregation function, an AI-assisted channel aggregation joint channel access function, or an AI-assisted channel access function.

With reference to the eleventh aspect, in a possible implementation, the transceiver unit is further configured to send a parameter of the neural network, where the parameter of the neural network includes at least one of a bias and a weight of a neuron.

For example, the processing unit is further configured to: obtain the parameter of the neural network; and send the parameter of the neural network through the transceiver unit or the control the transceiver unit to send the parameter of the neural network.

It should be understood that for specific descriptions of the second frame, the parameter of the neural network, and the like, refer to the ninth aspect or the tenth aspect. Details are not described herein again.

According to a twelfth aspect, this application provides a first communication apparatus, including a transceiver unit and a processing unit. The transceiver unit is configured to receive a second frame, where the second frame includes third indication information, and the third indication information indicates at least one of an output layer structure of a neural network and a manner of selecting a decision result of the neural network. The processing unit is configured to determine, based on an indication of the third indication information in the second frame, at least one of the output layer structure of the neural network and the manner of selecting the decision result of the neural network. The neural network corresponds to an AI-assisted channel aggregation function, an AI-assisted channel aggregation joint channel access function, or an AI-assisted channel access function.

With reference to the twelfth aspect, in a possible implementation, the transceiver unit is further configured to receive a parameter of the neural network, where the parameter of the neural network includes at least one of a bias and a weight of a neuron.

It should be understood that for specific descriptions of the second frame, the parameter of the neural network, and the like, refer to the ninth aspect or the tenth aspect. Details are not described herein again.

According to a thirteenth aspect, this application provides an AI-assisted channel aggregation method. The method includes: A first communication apparatus obtains input information of a neural network, where the neural network corresponds to an AI-assisted channel aggregation function, an AI-assisted channel aggregation joint channel access function, or an AI-assisted channel access function; the first communication apparatus obtains a structure and a parameter of the neural network, and determines the neural network based on the structure and the parameter of the neural network; and the first communication apparatus obtains T monitored datasets, and inputs the T datasets into the neural network for processing to obtain a channel aggregation decision result, a channel aggregation joint channel access decision result, or a channel access decision result. One dataset includes one or more pieces of data, and one piece of data corresponds to one type of input information.

The first communication apparatus in this application performs AI-assisted channel aggregation, AI-assisted channel aggregation joint channel access, or AI-assisted channel access by using a neural network that has been trained by another communication apparatus (for example, a second communication apparatus), so as to improve performance. In addition, the first communication apparatus does not need to train the neural network by itself. This can reduce energy consumption of the first communication apparatus. In addition, compared with the conventional technology (that is, a conventional channel aggregation method), this application further has advantages such as high adaptability, low complexity, good scalability, and multi-vendor interworking.

With reference to the thirteenth aspect, in a possible implementation, before the first communication apparatus obtains the input information of the neural network, the method further includes: The first communication apparatus determines to enable the AI-assisted channel aggregation function, the AI-assisted channel aggregation joint channel access function, or the AI-assisted channel access function.

With reference to the thirteenth aspect, in a possible implementation, the method further includes: The first communication apparatus obtains a manner of selecting a decision result of the neural network. Inputting the T datasets into the neural network for processing to obtain a rate adaptation decision result or a rate adaptation joint channel access decision result includes: inputting the T datasets into the neural network for processing to obtain a processing result, and selecting the channel aggregation decision result, the channel aggregation joint channel access decision result, or the channel access decision result from the processing result in the selection manner.

With reference to the thirteenth aspect, in a possible implementation, the structure of the neural network includes an input layer structure, an output layer structure, and a hidden layer structure.

Optionally, that the first communication apparatus obtains a structure of the neural network includes: The first communication apparatus determines the input layer structure of the neural network based on the input information of the neural network, and obtains the output layer structure and the hidden layer structure of the neural network.

According to a fourteenth aspect, this application provides a first communication apparatus, including a transceiver unit and a processing unit. The processing unit is configured to obtain input information of a neural network, where the neural network corresponds to an AI-assisted channel aggregation function, an AI-assisted channel aggregation joint channel access function, or an AI-assisted channel access function. The processing unit is further configured to obtain a structure of the neural network, and receive a parameter of the neural network through the transceiver unit. The processing unit is further configured to determine the neural network based on the structure and the parameter of the neural network. The processing unit is further configured to: obtain T monitored datasets, and input the T datasets into the neural network for processing to obtain a channel aggregation decision result, a channel aggregation joint channel access decision result, or a channel access decision result. One dataset includes one or more pieces of data, and one piece of data corresponds to one type of input information.

With reference to the fourteenth aspect, in a possible implementation, the processing unit is further configured to determine to enable the AI-assisted channel aggregation function, the AI-assisted channel aggregation joint channel access function, or the AI-assisted channel access function.

With reference to the fourteenth aspect, in a possible implementation, the processing unit is further configured to: obtain a manner of selecting a decision result of the neural network, and input the T datasets into the neural network for processing. The processing unit is specifically configured to: input the T datasets into the neural network for processing to obtain a processing result, and select the channel aggregation decision result, the channel aggregation joint channel access decision result, or the channel access decision result from the processing result in the selection manner.

With reference to the fourteenth aspect, in a possible implementation, the structure of the neural network includes an input layer structure, an output layer structure, and a hidden layer structure.

Optionally, the processing unit is specifically configured to: determine the input layer structure of the neural network based on the input information of the neural network, and obtain the output layer structure and the hidden layer structure of the neural network.

It may be understood that, in the thirteenth aspect and the fourteenth aspect, for specific descriptions of the structure, the parameter, the input information, and the like of the neural network, refer to related descriptions in the following embodiments. Details are not described herein.

According to a fifteenth aspect, an embodiment of this application provides a first communication apparatus. The first communication apparatus includes a processor, configured to perform the method according to any one of the first aspect, the sixth aspect, the tenth aspect, and the thirteenth aspect, or the possible implementations of any one of the first aspect, the sixth aspect, the tenth aspect, and the thirteenth aspect. Alternatively, the processor is configured to execute a program stored in a memory. When the program is executed, the method according to any one of the first aspect, the sixth aspect, the tenth aspect, and the thirteenth aspect, or the possible implementations of any one of the first aspect, the sixth aspect, the tenth aspect, and the thirteenth aspect is performed.

With reference to the fifteenth aspect, in a possible implementation, the memory is located outside the first communication apparatus.

With reference to the fifteenth aspect, in a possible implementation, the memory is located in the first communication apparatus.

In this embodiment of this application, the processor and the memory may alternatively be integrated into one device. In other words, the processor and the memory may alternatively be integrated together.

With reference to the fifteenth aspect, in a possible implementation, the first communication apparatus further includes a transceiver. The transceiver is configured to receive a signal or send a signal.

According to a sixteenth aspect, an embodiment of this application provides a second communication apparatus. The second communication apparatus includes a processor, configured to perform the method according to any one of the second aspect, the fifth aspect, and the ninth aspect, or the possible implementations of any one of the second aspect, the fifth aspect, and the ninth aspect. Alternatively, the processor is configured to execute a program stored in a memory. When the program is executed, the method according to any one of the second aspect, the fifth aspect, and the ninth aspect, or the possible implementations of any one of the second aspect, the fifth aspect, and the ninth aspect is performed.

With reference to the sixteenth aspect, in a possible implementation, the memory is located outside the second communication apparatus.

With reference to the sixteenth aspect, in a possible implementation, the memory is located in the second communication apparatus.

In this embodiment of this application, the processor and the memory may alternatively be integrated into one device. In other words, the processor and the memory may alternatively be integrated together.

With reference to the sixteenth aspect, in a possible implementation, the second communication apparatus further includes a transceiver. The transceiver is configured to receive a signal or send a signal.

According to a seventeenth aspect, an embodiment of this application provides a first communication apparatus. The first communication apparatus includes a logic circuit and an interface, and the logic circuit is coupled to the interface.

In a design, the logic circuit is configured to obtain function request information, where the function request information is used to request to enable an AI-assisted channel aggregation function, an AI-assisted channel aggregation joint channel access function, or an AI-assisted channel access function. The interface is configured to output the function request information and input function response information, where the function response information is used to respond to a request of the function request information.

In a design, the interface is configured to input a first frame, where the first frame includes first indication information, and the first indication information indicates input information of a neural network. The logic circuit is configured to determine at least one of the input information of the neural network and an input layer structure of the neural network based on an indication of the first indication information in the first frame. The neural network corresponds to an AI-assisted channel aggregation function, an AI-assisted channel aggregation joint channel access function, or an AI-assisted channel access function.

In a design, the interface is configured to input a second frame, where the second frame includes third indication information, and the third indication information indicates at least one of an output layer structure of a neural network and a manner of selecting a decision result of the neural network. The logic circuit is configured to determine, based on an indication of the third indication information in the second frame, at least one of the output layer structure of the neural network and the manner of selecting the decision result of the neural network. The neural network corresponds to an AI-assisted channel aggregation function, an AI-assisted channel aggregation joint channel access function, or an AI-assisted channel access function.

In a design, the logic circuit is configured to: obtain input information of a neural network, where the neural network corresponds to an AI-assisted rate adaptation function or an AI-assisted rate adaptation joint channel access function; and obtain a structure of the neural network. The interface is configured to input a parameter of the neural network. The logic circuit is further configured to determine the neural network based on the structure and the parameter of the neural network. The logic circuit is further configured to: obtain T monitored datasets, and input the T datasets into the neural network for processing to obtain a channel aggregation decision result, a channel aggregation joint channel access decision result, or a channel access decision result. One dataset includes one or more pieces of data, and one piece of data corresponds to one type of input information.

According to an eighteenth aspect, an embodiment of this application provides a second communication apparatus. The second communication apparatus includes a logic circuit and an interface, and the logic circuit is coupled to the interface.

In a design, the interface is configured to input function request information, where the function request information is used to request to enable an AI-assisted channel aggregation function, an AI-assisted channel aggregation joint channel access function, or an AI-assisted channel access function. The logic circuit is configured to obtain function response information, where the function response information is used to respond to a request of the function request information. The interface is configured to output the function response information.

In a design, the logic circuit is configured to generate a first frame, where the first frame includes first indication information, and the first indication information indicates input information of a neural network. The interface is configured to output the first frame. The neural network corresponds to an AI-assisted channel aggregation function, an AI-assisted channel aggregation joint channel access function, or an AI-assisted channel access function.

In a design, the logic circuit is configured to generate a second frame, where the second frame includes third indication information, and the third indication information indicates at least one of an output layer structure of a neural network and a manner of selecting a decision result of the neural network. The interface is configured to output the second frame. The neural network corresponds to an AI-assisted channel aggregation function, an AI-assisted channel aggregation joint channel access function, or an AI-assisted channel access function.

According to a nineteenth aspect, an embodiment of this application provides a computer-readable storage medium. The computer-readable storage medium is configured to store a computer program. When the computer program is run on a computer, the method according to any one of the first aspect, the sixth aspect, the tenth aspect, and the thirteenth aspect, or the possible implementations of any one of the first aspect, the sixth aspect, the tenth aspect, and the thirteenth aspect is performed.

According to a twentieth aspect, an embodiment of this application provides a computer-readable storage medium. The computer-readable storage medium is configured to store a computer program. When the computer program is run on a computer, the method according to any one of the second aspect, the fifth aspect, and the ninth aspect, or the possible implementations of any one of the second aspect, the fifth aspect, and the ninth aspect is performed.

According to a twenty-first aspect, an embodiment of this application provides a computer program product. The computer program product includes a computer program or computer code. When the computer program or the computer code is run on a computer, the method according to any one of the first aspect, the sixth aspect, the tenth aspect, and the thirteenth aspect, or the possible implementations of any one of the first aspect, the sixth aspect, the tenth aspect, and the thirteenth aspect is performed.

According to a twenty-second aspect, an embodiment of this application provides a computer program product. The computer program product includes a computer program or computer code. When the computer program or the computer code is run on a computer, the method according to any one of the second aspect, the fifth aspect, and the ninth aspect, or the possible implementations of any one of the second aspect, the fifth aspect, and the ninth aspect is performed.

According to a twenty-third aspect, an embodiment of this application provides a computer program. When the computer program is run on a computer, the method according to any one of the first aspect, the sixth aspect, the tenth aspect, and the thirteenth aspect, or the possible implementations of any one of the first aspect, the sixth aspect, the tenth aspect, and the thirteenth aspect is performed.

According to a twenty-fourth aspect, an embodiment of this application provides a computer program. When the computer program is run on a computer, the method according to any one of the second aspect, the fifth aspect, and the ninth aspect, or the possible implementations of any one of the second aspect, the fifth aspect, and the ninth aspect is performed.

According to a twenty-fifth aspect, an embodiment of this application provides a wireless communication system. The wireless communication system includes a first communication apparatus and a second communication apparatus. The first communication apparatus is configured to perform the method according to any one of the first aspect, the sixth aspect, the tenth aspect, and the thirteenth aspect, or the possible implementations of any one of the first aspect, the sixth aspect, the tenth aspect, and the thirteenth aspect. The second communication apparatus is configured to perform the method according to any one of the second aspect, the fifth aspect, and the ninth aspect, or the possible implementations of any one of the second aspect, the fifth aspect, and the ninth aspect.

According to embodiments of this application, the foundation for the resource-limited node to implement AI-assisted channel aggregation, AI-assisted channel access, or AI-assisted channel aggregation joint channel access can be laid. Further, the resource-limited node in the network may perform AI-assisted channel aggregation, AI-assisted channel access, or AI-assisted channel aggregation joint channel access by using the neural network trained by the node with the more powerful function in the network, to improve performance.

**BRIEF DESCRIPTION OF DRAWINGS**

To describe technical solutions of embodiments of this application more clearly, the following briefly describes accompanying drawings for describing embodiments.

FIG. 1 is a diagram of aggregation of a plurality of adjacent channels;
FIG. 2 is a diagram of preamble puncturing-based transmission;
FIG. 3 is a diagram of a fully connected neural network including three layers;

FIG. 4 is a diagram in which a neuron calculates an output based on inputs;

FIG. 5a is a diagram of a structure of an access point according to an embodiment of this application;

FIG. 5b is a diagram of another structure of an access point according to an embodiment of this application;

FIG. 5c is a diagram of a structure of a station according to an embodiment of this application;

FIG. 5d is a diagram of another structure of a station according to an embodiment of this application;

FIG. 6 is a diagram of an architecture of a communication system according to an embodiment of this application;

FIG. 7 is a schematic flowchart of an AI-assisted channel aggregation method according to an embodiment of this application;

FIG. 8 is a diagram of a neural network model and inputs and outputs of the neural network model according to an embodiment of this application;

FIG. 9 is a diagram in which total network throughputs of different channel aggregation algorithms vary with traffic load according to an embodiment of this application;

FIG. 10 is a schematic flowchart of an information exchange method according to an embodiment of this application;

FIG. 11 is a diagram of a frame format of an information element according to an embodiment of this application;

FIG. 12 is a diagram of a frame format of an A-control subfield according to an embodiment of this application;

FIG. 13 is another schematic flowchart of an information exchange method according to an embodiment of this application;

FIG. 14 is a diagram of another frame format of an information element according to an embodiment of this application;

FIG. 15 is a diagram of another frame format of an A-control subfield according to an embodiment of this application;

FIG. 16 is still another schematic flowchart of an information exchange method according to an embodiment of this application;

FIG. 17 is a diagram of still another frame format of an information element according to an embodiment of this application;

FIG. 18 is a diagram of still another frame format of an A-control subfield according to an embodiment of this application;

FIG. 19 is yet another schematic flowchart of an information exchange method according to an embodiment of this application;

FIG. 20 is a diagram of a structure of a communication apparatus according to an embodiment of this application;

FIG. 21 is a diagram of a structure of a communication apparatus 1000 according to an embodiment of this application; and

FIG. 22 is a diagram of another structure of a communication apparatus according to an embodiment of this application.

## DESCRIPTION OF EMBODIMENTS

The following clearly and completely describes technical solutions in embodiments of this application with reference to accompanying drawings in embodiments of this application.

In this application, the terms "first", "second", and so on are intended to distinguish between different objects but do not indicate a particular order of the objects. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, "at least one (item) "means one or more, "a plurality of" means two or more, and "at least two (items)" means two, three, or more. In addition, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

In this application, the term "example", "for example", or the like is used to represent giving an example, an illustration, or a description. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

It should be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

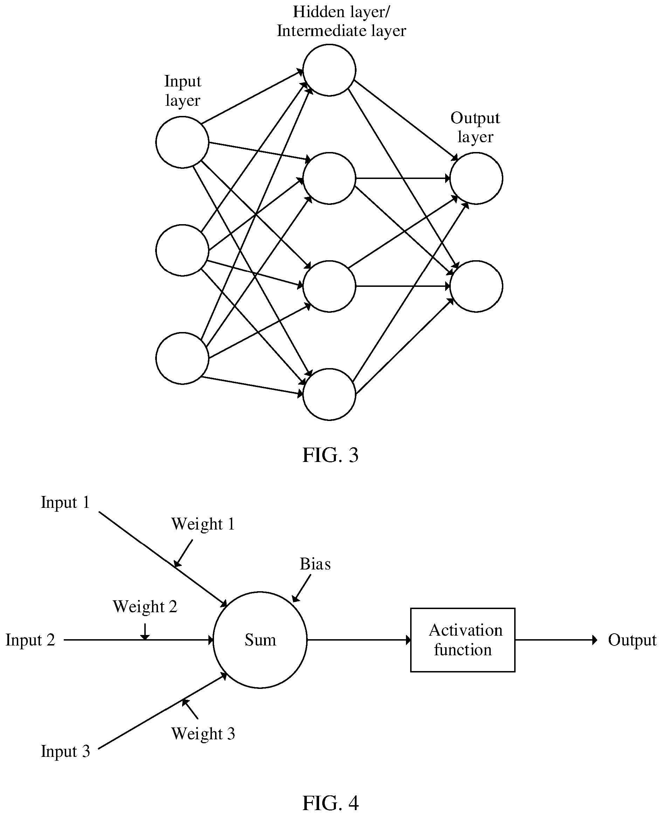

A neural network (neural network, NN) is a machine learning technology that simulates a human brain neural network to implement functions similar to artificial intelligence. The neural network includes at least three layers: an input layer, an intermediate layer (also referred to as a hidden layer), and an output layer. Some neural networks each may include more hidden layers between an input layer and an output layer. A simplest neural network is used as an example to describe an internal structure and an implementation of the neural network. FIG. 3 is a diagram of a fully connected neural network including three layers. As shown in FIG. 3, the neural network includes three layers: an input layer, a hidden layer, and an output layer. The input layer includes three neurons, the hidden layer includes four neurons, and the output layer includes two neurons. In addition, each layer of neurons are fully connected to a next layer of neurons. Each connection line between neurons corresponds to a weight, and these weights may be updated through training. Each neuron at the hidden layer and each neuron at the output layer may further correspond to biases, and these biases may be updated through training. Updating the neural network refers to updating these weights and biases. All information about the neural network is known by knowing a structure of the neural network, that is, a number of neurons included in each layer, how an output of a previous neuron is input into a subsequent neuron (that is, a connection relationship between the neurons), and a parameter of the neural network, that is, the weight and the bias.

It can be seen from FIG. 3 that each neuron may have a plurality of input connection lines, and each neuron calculates an output based on an input. FIG. 4 is a diagram in which a neuron calculates an output based on inputs. As shown in FIG. 4, one neuron includes three inputs, one output, and two calculation functions, and an output calculation formula may be represented as follows:

$$\text{output=activation function (input } 1*\text{weight } 1+\text{input } 2*\text{weight } 2+\text{input } 3*\text{weight } 3+\text{bias)}$$

$$(1\text{-}1)$$

Herein, the symbol "*" represents a mathematical operation "multiplication". Details are not described below again.

Each neuron may have a plurality of output connection lines, and an output of one neuron is used as an input of a next neuron. It should be understood that an input layer has only an output connection line, each neuron at the input layer is a value input into a neural network, and an output value of each neuron is used as an input of all output connection lines. An output layer has only an input connection line, and an output is calculated according to the foregoing formula (1-1). Optionally, the output layer may not have calculation of an activation function, in other words, the foregoing formula (1-1) may be transformed into: output=input 1*weight 1+input 2*weight 2+input 3*weight 3+bias.

For example, a k-layer neural network may be represented as:

$$y=f_k(f_{k-1}(...(f_1(w_1*x+b_1)))) \ (1\text{-}2)$$

Herein, x represents an input of the neural network, y represents an output of the neural network, $w_i$ represents a weight of an $i^{th}$-layer neural network, $b_i$ represents a bias of the $i^{th}$-layer neural network, $f_i$ represents an activation function of the $i^{th}$-layer neural network, and i=1, 2, ..., k.

Methods provided in this application may be applied to a wireless local area network (wireless local area network, WLAN) system, for example, Wi-Fi. For example, the methods provided in this application are applicable to the institute of electrical and electronics engineers (institute of electrical and electronics engineers, IEEE) 802.11 series protocols such as the 802.11a/b/g protocol, the 802.11n protocol, the 802.11ac protocol, the 802.11ax protocol, the 802.11be protocol or Wi-Fi 7, or a next-generation protocol like Wi-Fi 8. Examples not enumerated herein. The methods provided in this application may be further applied to various communication systems such as a cellular system (including but not limited to a long term evolution (long term evolution, LTE) system, a 5th generation (5th generation, 5G) communication system, a new communication system emerging in future communication development) (for example, a 6G communication system), and the like), an internet of things (internet of things, IoT) system, a narrowband internet of things (narrowband internet of things, NB-IoT) system, another short-distance communication system (including but not limited to Bluetooth (Bluetooth), an ultra-wideband (ultra-wideband, UWB)), and the like.

The methods provided in this application may be applied to a scenario in which one node performs data transmission with one or more nodes, for example, single-user uplink/downlink transmission, multi-user uplink/downlink transmission, and device-to-device (device-to-device, D2D) transmission. Any one of the foregoing nodes may be a communication apparatus in a wireless communication system. In other words, the methods provided in this application may be implemented by the communication apparatus in the wireless communication system. For example, the communication apparatus may be at least one of an access point (access point, AP) or a station (station, STA).

Optionally, all communication apparatuses (the AP and the STA) in this application have a specific AI capability, that is, a neural network may be used to perform inference and decision-making, but only some communication apparatuses (for example, the AP) can train the neural network. In other words, in addition to a wireless communication function, the communication apparatus in this application has an AI processing capability, that is, supports inference and decision-making of the neural network.

The access point in this application is an apparatus having a wireless communication function and an AI processing capability, supports communication or sensing by using a WLAN protocol, has a function of communicating or sensing with another device (for example, the station or another access point) in a WLAN network, and certainly, may further have a function of communicating or sensing with another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having the wireless communication function may be an entire device, or may be a chip or a processing system installed in the entire device. The device in which the chip or the processing system is installed may implement the method and a function in embodiments of this application under control of the chip or the processing system. The AP in embodiments of this application is an apparatus that provides a service for the STA, and may support the 802.11 series protocols. For example, the access point may be an access point for a terminal (for example, a mobile phone) to access a wired (or wireless) network, and is mainly deployed in a home, a building, and a park. A typical coverage radius is tens of meters to 100-odd meters. It is clear that the access point may alternatively be deployed outdoors. For another example, the AP may be a communication entity, for example, a communication server, a router, a switch, or a bridge, or the AP may include various forms of macro base stations, micro base stations, relay stations, and the like. It is clear that the AP may alternatively be a chip or a processing system in these devices in various forms, to implement the method and the function in embodiments of this application. The access point in this application may be an extremely high throughput (extremely high throughput, EHT) AP, an access point of a future Wi-Fi standard, or the like.

The station in this application is an apparatus having a wireless communication function and an AI processing capability, supports communication or sensing by using the WLAN protocol, and has a capability of communicating or sensing with another station or the access point in the WLAN network. In the WLAN system, the station may be referred to as a non-access point station (non-access point station, non-AP STA). For example, the STA is any user communication device that allows a user to communicate with or sense an AP and further communicate with a WLAN. The apparatus having the wireless communication function may be an entire device, or may be a chip or processing system installed in the entire device. The device in which the chip or the processing system is installed may implement the method and the function in embodiments of this application under control of the chip or the processing system. For example, the station may be a wireless communication chip, a wireless sensor, or a wireless communication terminal, and may also be referred to as a user. For another example, the station may be a mobile phone, a tablet computer, a set-top box, a smart television, a smart wearable device, a vehicle-mounted communication device, or a computer supporting a Wi-Fi communication function.

The WLAN system can provide high-rate and low-latency transmission. With the continuous evolution of WLAN application scenarios, the WLAN system is to be applicable to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. It is clear that a device (for example, an access point or a station) supporting WLAN communication or sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, AR, VR, or another wearable device), a smart device (for example, a printer, a projector, a loudspeaker, or a stereo) in a smart office, an internet of vehicles device in the internet of vehicles, infrastructure (for example, a vending machine, a self-service navigation station of a supermarket, a self-service cash register device, or a self-service ordering machine) in a daily life scenario, a device in a large sports and music venue, or the like. For example, the access point and the station may be devices applied to the internet of vehicles, internet of things nodes in the internet of things (IoT, internet of things), or sensors, or may be smart cameras, smart remote controls, or smart water/electricity meters in a smart home, or may be sensors in a smart city. Specific forms of the STA and the AP are not limited in embodiments of this application, and are merely examples for description herein.

Although this application is mainly described by using a network in which IEEE 802.11 is deployed as an example, a person skilled in the art easily understands that various aspects of this application may be expanded to other networks that use various standards or protocols, for example, a high performance radio LAN (high performance radio LAN, HIPERLAN) (which is a wireless standard that is similar to the IEEE 802.11 standard, and is mainly used in Europe), a wide area network (wide area network, WAN), a wireless local area network (WLAN), a personal area network (personal area network, PAN), or another known or later developed network.

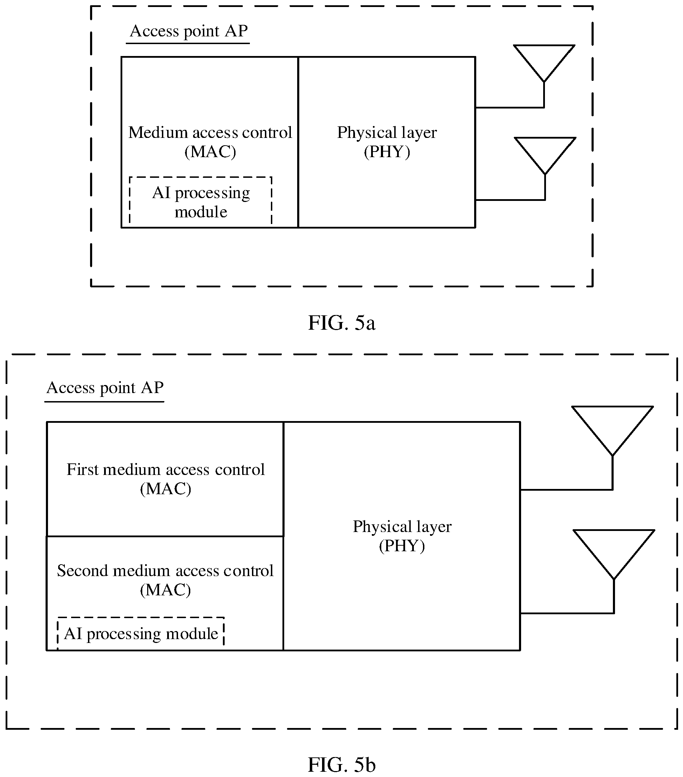

For example, the 802.11 standard focuses on PHY and MAC parts. FIG. 5a is a diagram of a structure of an access point according to an embodiment of this application. The AP may be a multi-antenna AP or may be a single-antenna AP. As shown in FIG. 5a, the AP includes a physical layer (physical layer, PHY) processing circuit and a medium access control (medium access control, MAC) processing circuit (which may also be referred to as a MAC layer processing circuit). The physical layer processing circuit may be configured to process a physical layer signal, and the MAC layer processing circuit may be configured to process a MAC layer signal. Optionally, the MAC layer processing circuit includes an AI processing module. The AI processing module may be configured to train a neural network and/or perform inference and decision-making by using a trained neural network, to implement various AI-assisted functions, for example, an AI-assisted channel aggregation function, an AI-assisted channel aggregation joint channel access function, and an AI-assisted channel access function. For example, FIG. 5b is a diagram of another structure of an access point according to an embodiment of this application. Different from the AP shown in FIG. 5a, the AP shown in FIG. 5b includes two MAC layers, that is, two MAC layer processing circuits, such as a first MAC layer processing circuit (which may also be referred to as a first MAC layer processing circuit) and a second MAC layer processing circuit (which may also be referred to as a second MAC layer processing circuit). Optionally, the first MAC layer processing circuit may be configured to process a first MAC layer signal, and the second MAC layer processing circuit may be configured to process an AI-related signal. For example, the second MAC processing circuit includes an AI processing module. Details about the AI processing module are not described again. It may be understood that a second MAC layer may also be referred to as an AI-MAC layer or the like. A name of the second MAC is not limited in this application. The 802.11 standard focuses on the PHY and MAC parts. Therefore, other parts included in the access point are not described in detail in this embodiment of this application.

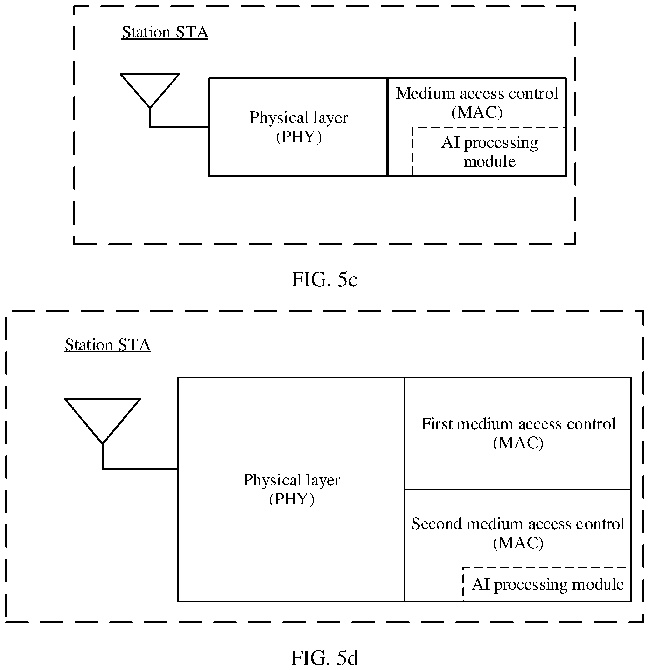

FIG. 5c is a diagram of a structure of a station according to an embodiment of this application. In an actual scenario, the STA may be a single-antenna STA or may be a multi-antenna STA, and may be a device with more than two antennas. The STA may include a PHY processing circuit and a MAC processing circuit. The physical layer processing circuit may be configured to process a physical layer signal, and the MAC layer processing circuit may be configured to process a MAC layer signal. Optionally, the MAC layer processing circuit includes an AI processing module. The AI processing module may be configured to train a neural network and/or perform inference and decision-making by using a trained neural network, to implement various AI-assisted functions, for example, an AI-assisted channel aggregation function, an AI-assisted channel aggregation joint channel access function, and an AI-assisted channel access function. For example, FIG. 5d is a diagram of another structure of a station according to an embodiment of this application. Different from the station shown in FIG. 5c, the station shown in FIG. 5d includes two MAC layer processing circuits, for example, a first MAC layer processing circuit and a second MAC layer processing circuit. Optionally, the first MAC layer processing circuit may be configured to process a first MAC layer signal, and the second MAC layer processing circuit may be configured to process an AI-related signal. For example, the second MAC layer processing circuit includes an AI processing module. Details about the AI processing module are not described again. It may be understood that a second MAC layer may also be referred to as an AI-MAC layer or the like. A name of the second MAC is not limited in this application.

It may be understood that the AI processing module shown above may also be referred to as an AI processing circuit, a neural-network-based processing circuit, a neural network processing circuit, a neural network processing unit, or the like. A specific name of the AI processing module is not limited in embodiments of this application.

It may be understood that the structures of the access points shown in FIG. 5a and FIG. 5b and the structures of the stations shown in FIG. 5c and FIG. 5d are merely examples. For example, the access point and the station each may further include at least one of a memory, a scheduler, a controller, a processor, or a radio frequency circuit. For specific descriptions of the station and the access point, refer to the following apparatus embodiments. Details are not described herein.

For example, the communication system to which the methods provided in this application are applied may include an access point (AP) and a station (STA), or a plurality of access points (APs), or a plurality of stations (STAs). The access point may also be understood as an access point entity, and the station may also be understood as a station entity. For example, this application is applicable to a scenario in which an AP communicates with or senses a STA in the WLAN. Optionally, the AP may communicate with or sense a single STA, or the AP may simultaneously communicate with or sense a plurality of STAs. For another example, this application is applicable to a scenario in which a plurality of APs coordinate in the WLAN. For still another example, this application is applicable to a scenario in which D2D communication is performed between STAs in the WLAN. Both the AP and the STA may support WLAN communication protocols. The communication protocols may include the IEEE802.11 series protocols, for example, may be applicable to the 802.11be standard, or may be applicable to a standard later than 802.11be.

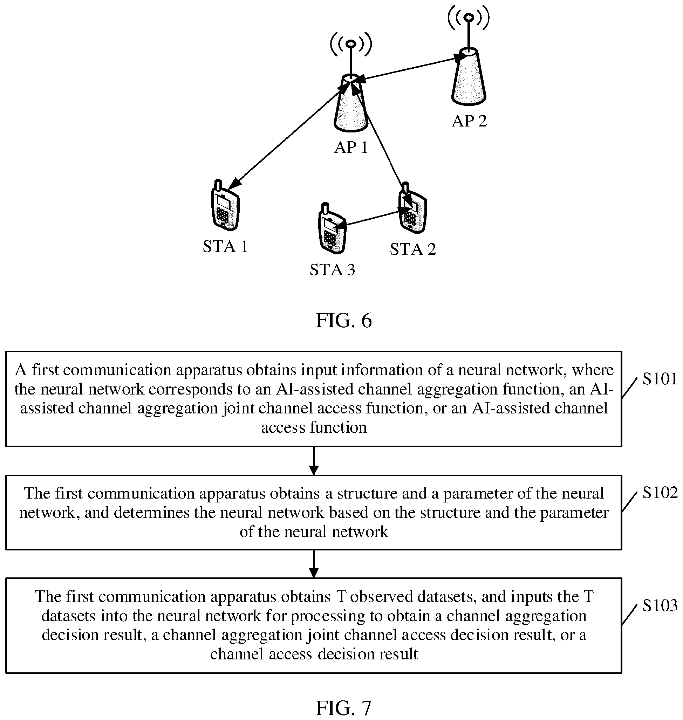

FIG. 6 is a diagram of an architecture of a communication system according to an embodiment of this application.

The communication system may include one or more APs and one or more STAs. FIG. 6 shows two access points: an AP 1 and an AP 2, and three stations: a STA 1, a STA 2, and a STA 3. It may be understood that the one or more APs may communicate with the one or more STAs. Certainly, an AP may communicate with an AP, and a STA may communicate with a STA.

It may be understood that, in FIG. 6, an example in which the STA is a mobile phone and the AP is a router is used, and this does not mean that a type of the AP and a type of the STA in this application are limited. In addition, FIG. 6 shows only two APs and three STAs as examples. However, there may be more or less APs or STAs. This is not limited in this application.

In communication apparatuses shown below in this application, a first communication apparatus may be a resource-limited node in a network (for example, a node that cannot complete neural network training but can perform inference and decision-making by using a neural network), for example, the STA in the scenario in which the AP communicates with the STA, an AP with a weak capability (for example, a conventional access point) in the scenario in which the plurality of APs coordinate, or a STA with a weak capability (for example, a conventional station) in the D2D communication scenario. Correspondingly, a second communication apparatus may be a node whose resource is not limited or whose capability is more powerful in the network (for example, a node that can complete neural network training and can make the inference and make the decision by using the neural network), for example, the AP in the scenario in which the AP communicates with the STA, an AP with a strong capability (for example, an access point supporting a latest 802.11 standard) in the scenario in which the plurality of APs coordinate, or a STA with a strong capability (for example, a station supporting the latest 802.11 standard) in the D2D communication scenario. The latest 802.11 standard herein may be a future Wi-Fi standard, for example, Wi-Fi 8 (that is, a next-generation standard of 802.11be), Wi-Fi 9 (that is, a next-generation standard of Wi-Fi 8), Wi-Fi 10 (that is, a next-generation standard of Wi-Fi 9), or the like. The conventional access point herein may be an access point supporting only a standard earlier than the latest 802.11 standard, and the conventional station may be a station supporting only the standard earlier than the latest 802.11 standard.

Optionally, the communication apparatus in this application includes a module that can make the inference and make the decision by using the neural network, for example, an AI processing module. For example, an AI processing module in the second communication apparatus may not only make the inference and make the decision by using the neural network, but may also train the neural network. An AI processing module in the first communication apparatus may make the inference and make the decision by using the neural network trained by the second communication apparatus. Certainly, in some optional embodiments, the AI processing module in the first communication apparatus may alternatively train the neural network.

It may be understood that a difference between the first communication apparatus and the second communication apparatus includes but is not limited to: capability strength, whether a resource is limited, or whether to have a capability of training the neural network.

This application provides an information exchange method and a related apparatus, so that a resource-limited node (which may be a first communication apparatus in this application) in a network can obtain related information of a neural network (for example, a function, a structure, a parameter, an input, and an output of the neural network) trained by a node with a more powerful function (which may be a second communication apparatus in this application) in the network. This provides a basis for the resource-limited node to implement AI-assisted channel aggregation, AI-assisted channel access, or AI-assisted channel aggregation joint channel access. Generally, because neural network training requires a large computing capability and energy consumption, only some nodes (usually nodes with strong capabilities) can complete neural network training and use by themselves, and other nodes (usually resource-limited nodes) cannot complete neural network training, or AI-based channel aggregation, AI-based channel access, or AI-based channel aggregation joint channel access cannot be used to improve performance because costs of training the neural network are excessively high (for example, energy consumption is very high). However, according to the method provided in this embodiment of this application (after the first communication apparatus requests to enable an AI-assisted related function, for example, an AI-assisted channel aggregation function, an AI-assisted channel access function, or an AI-assisted channel aggregation joint channel access function), the second communication apparatus may notify the first communication apparatus of the related information of the neural network (for example, information such as the function, the structure, the parameter, the input, and the output of the neural network) trained by the second communication apparatus, so that the first communication apparatus restores, based on the related information, the neural network trained by the second communication apparatus, and makes the inference and makes the decision based on data observed by the first communication apparatus and the restored neural network to obtain a corresponding decision result for transmission. The first communication apparatus does not need to train the neural network by itself. This can not only provide the basis for the resource-limited node to implement AI-assisted channel aggregation, AI-assisted channel access, or AI-assisted channel aggregation joint channel access, but also reduce energy consumption of the first communication apparatus.

Further, an embodiment of this application further provides an AI-assisted channel aggregation method and a related apparatus, so that a resource-limited node (that is, a first communication apparatus) in a network performs AI-assisted channel aggregation, AI-assisted channel aggregation joint channel access, or AI-assisted channel access by using a neural network trained by a node with a more powerful function (that is, a second communication apparatus) in the network. This improves performance.

The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of embodiments or implementations, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

It should be understood that a sequence of the following embodiments does not represent a degree of importance. Embodiments may be implemented separately, or may be implemented in combination. For details, refer to the following descriptions. Details are not described herein. To facilitate understanding of the technical solutions provided in this application, an AI-assisted channel aggregation method is first described, then an information exchange method based on related information of a neural network (for example, a function, a structure, a parameter, input information, and output information of the neural network) is described, and finally a related apparatus or device in this application is described.

**Embodiment 1**

Embodiment 1 of this application mainly describes an implementation in which a resource-limited node (the following uses a first communication apparatus as an example for description) performs AI-assisted channel aggregation, AI-assisted channel aggregation joint channel access, or AI-assisted channel access over a neural network trained by another node (the following uses a second communication apparatus as an example for description) in a network, that is, how the first communication apparatus performs an AI-assisted related function to improve performance.

FIG. 7 is a schematic flowchart of an AI-assisted channel aggregation method according to an embodiment of this application. As shown in FIG. 7, the AI-assisted channel aggregation method includes but is not limited to the following steps.

S101: A first communication apparatus obtains input information of a neural network, where the neural network corresponds to an AI-assisted channel aggregation function, an AI-assisted channel aggregation joint channel access function, or an AI-assisted channel access function.

The neural network in this application corresponds to an AI-assisted related function, or the neural network in this application is used to implement or support an AI-assisted related function. It may be understood that the neural network in this application may be obtained through training by another communication apparatus (which is a communication apparatus other than the first communication apparatus in a network, for example, a second communication apparatus), so that the another communication apparatus can implement or support the AI-assisted related function. The AI-assisted related function includes one or more of the following: the AI-assisted channel aggregation function, the AI-assisted channel access function, or the AI-assisted channel aggregation joint channel access function. Optionally, the AI-assisted related function may further include one or more of the following: an AI-assisted rate adaptation function or an AI-assisted rate adaptation joint channel access function. In other words, there may be a one-to-many relationship between the neural network in this application and the AI-assisted related function. That is, one neural network is used to implement/support a plurality of AI-assisted functions, in other words, a plurality of different AI-assisted functions correspond to a same neural network. Alternatively, there may be a one-to-one relationship between the neural network in this application and the AI-assisted related function. That is, one neural network is used to implement/support one AI-assisted function, in other words, different AI-assisted functions correspond to different neural networks.

Different AI-assisted functions correspond to different input information of the neural network, that is, the functions correspond to the input information. Descriptions are provided below by using examples.

Example 1: When the neural network is used to implement or support the AI-assisted channel aggregation function (or when the neural network corresponds to the AI-assisted channel aggregation function), the input information of the neural network includes but is not limited to one or more of the following: a carrier sense result, a channel aggregation status, a data packet transmission result, duration of the carrier sense result, or duration of channel aggregation. Optionally, the input information of the neural network may further include but is not limited to one or more of the following: a packet loss rate, duration from a current moment to a moment of last successful transmission of this communication apparatus, duration from the current moment to a moment of last successful transmission of another communication apparatus on a channel, load information of this communication apparatus, or load information of the another communication apparatus on the channel.

Correspondingly, a decision result of the neural network includes but is not limited to one or more of the following: whether to perform channel aggregation, which channels are aggregated, or how many channels are aggregated.

Example 2: When the neural network is used to implement or support the AI-assisted channel aggregation joint channel access function (or when the neural network corresponds to the AI-assisted channel aggregation joint channel access function), the input information of the neural network includes but is not limited to one or more of the following: a carrier sense result, a channel aggregation status, channel access behavior, a data packet transmission result, duration of the carrier sense result, duration of channel aggregation, or duration of the channel access behavior. Optionally, the input information of the neural network may further include but is not limited to one or more of the following: a packet loss rate, a throughput, duration from a current moment to a moment of last successful transmission of this communication apparatus, duration from the current moment to a moment of last successful transmission of another communication apparatus on a channel, load information of this communication apparatus, or load information of the another communication apparatus on the channel.

Correspondingly, a decision result of the neural network includes but is not limited to one or more of the following: whether to perform channel aggregation and whether to perform access, which channels are aggregated and whether to perform access, or how many channels are aggregated and whether to perform access.

Example 3: When the neural network is used to implement or support the AI-assisted channel access function (or when the neural network corresponds to the AI-assisted channel access function), the input information of the neural network includes but is not limited to one or more of the following: a carrier sense result, a queuing delay, an access delay, channel access behavior, a data packet transmission result, duration of the carrier sense result, or duration of the channel access behavior. Optionally, the input information of the neural network may further include but is not limited to one or more of the following: a packet loss rate, a throughput, duration from a current moment to a moment of last successful transmission of this communication apparatus, or duration from the current moment to a moment of last successful transmission of another communication apparatus on a channel.

Correspondingly, a decision result of the neural network includes whether to access.

It may be understood that, based on a tone plan (tone plan) in an existing standard (for example, the 802.11be standard or the 802.11 ax standard), one 20 MHz channel may be divided into one 242-tone resource unit (resource unit, RU). For a specific tone plan, refer to the existing standard. Therefore, "AI-assisted channel aggregation" in this application may also cover or be applicable to an AI-assisted multiple resource units (Multiple RUs, MRU) combination scenario, that is, an AI method is used to determine resource units (resource units, RUs) or MRUs that are used together for transmission. Combination of multiple resource units (Multiple RUs) in this application may be combining the multiple RUs into an MRU, or may be aggregating a plurality of MRUs into a larger MRU.

It may be understood that when "AI-assisted channel aggregation" covers or is applicable to the AI-assisted MRU combination scenario, adaptively, one channel in AI-assisted channel aggregation is understood as one RU or one MRU. In a subsequent embodiment, for ease of description, the AI-assisted MRU combination scenario is described as AI-assisted channel aggregation, and certainly may equivalently alternatively be AI-assisted MRU combination.

AI-assisted channel access in this application may be understood as a special case of AI-assisted channel aggregation joint channel access. In other words, AI-assisted channel access is a case in which a number of aggregated channels is 1 in AI-assisted channel aggregation joint channel access. In other words, the foregoing example 3 may be understood as a special case of the foregoing example 2.

The another communication apparatus mentioned in the foregoing example 1 and the foregoing example 2 is a communication apparatus other than this communication apparatus in the network. This communication apparatus in embodiments of this application is the first communication apparatus.

The carrier sense result may be busy (busy) or idle (idle) of a channel. Because carrier sense is performed at a granularity of a subchannel, the carrier sense result herein may be understood as busy or idle of each subchannel. The channel aggregation status may refer to either channels on which channel aggregation is performed or a number of channels on which channel aggregation is performed, or may refer to whether all subchannels are aggregated. The channel access behavior may refer to either an accessed channel or a number of accessed channels, or may refer to whether each subchannel is accessed. The data packet transmission result may refer to transmission success or transmission failure after channel aggregation, or may refer to a transmission function or transmission failure on each subchannel. The queuing delay may be a time interval from time at which a data packet enters a sending queue to time at which the data packet is sent. The access delay may be a time interval from the time at which the data packet is sent to time at which the data packet is successfully sent.

For a channel division manner in this application, refer to the existing standard, for example, the 802.11be standard or the 802.11ax standard. This application is described by using an example in which subchannels are obtained through division at a granularity of a 20 MHz bandwidth.

In an implementation, when the first communication apparatus finds that performance of the first communication apparatus in a communication process is poor, for example, the first communication apparatus finds that a packet loss rate of the first communication apparatus is greater than a preset threshold, the first communication apparatus may determine to enable the AI-assisted channel aggregation function, the AI-assisted channel aggregation joint channel access function, or the AI-assisted channel access function, and then obtain the input information of the neural network. This neural network corresponds to a to-be-enabled function. A specific AI-assisted function to be enabled may be determined by the first communication apparatus according to a policy of the first communication apparatus. This is not limited in embodiments of this application.

In another implementation, the first communication apparatus sends function request information, where the function request information is used to request to enable the AI-assisted channel aggregation function, the AI-assisted channel aggregation joint channel access function, or the AI-assisted channel access function. After receiving the function request information, the second communication apparatus may reply with function response information, to respond to a request of the function request information. For specific implementation, refer to descriptions in Embodiment 2. Details are not described herein. If the function response information indicates that the request of the function request information is agreed, after receiving the function response information, the first communication apparatus may obtain the input information of the neural network. The neural network corresponds to the function that is requested to be enabled by the function request information.

There are at least two implementations in which the first communication apparatus obtains the input information of the neural network. In a first implementation, the first communication apparatus locally obtains the input information of the neural network. For example, a correspondence between an AI-assisted function (that is, a function implemented or supported by the neural network) and the input information of the neural network may be predefined, to indicate that one or more AI-assisted functions respectively correspond to which input information. For details, refer to the descriptions in the foregoing example 1 to the foregoing example 3. In a second implementation, the first communication apparatus receives the input information of the neural network from the second communication apparatus. Specifically, for an implementation in which the second communication apparatus exchanges the input information of the neural network with the first communication apparatus, refer to descriptions in Embodiment 3. Details are not described herein.

"Predefine" and "preset" in this application may be understood as "define", "predefine", "store", "pre-store", "pre-negotiate", "pre-configure", "solidify", "pre-burn", or the like.

S102: The first communication apparatus obtains a structure and a parameter of the neural network, and determines the neural network based on the structure and the parameter of the neural network.

The structure of the neural network in this application includes an input layer structure, an output layer structure, and a hidden layer structure. In this case, that the first communication apparatus obtains the structure of the neural network may be understood as follows: The first communication apparatus separately obtains the input layer structure, the output layer structure, and the hidden layer structure of the neural network.

Optionally, the input layer structure of the neural network includes a number of neurons at an input layer. The number of neurons at the input layer (that is, the input layer structure) may be determined based on a number of neurons corresponding to each type of input information, a number of pieces of/length of the input information of the neural network, and a maximum number of channels allowed for channel aggregation by the first communication apparatus. For a specific manner of determining the number of neurons at the input layer, refer to related descriptions in Embodiment 3. Details are not described herein. The number of neurons corresponding to each type of input information may be preset or defined in a standard protocol, or may be indicated by the second communication apparatus. For details about an indication manner, refer to related descriptions in Embodiment 3. Details are not described herein. The number of pieces of/length of the input information of the neural network may be preset or defined in a standard protocol, or may be indicated by the second communication apparatus. For details about an indication manner, refer to related descriptions in Embodiment 3. Details are not described herein. The maximum number of channels allowed for channel aggregation by the first communication apparatus may be determined based on a maximum channel bandwidth supported by the first communication apparatus. For a specific determining manner, refer to descriptions in Embodiment 3. Details are not described herein.

Optionally, the output layer structure of the neural network includes one or more of the following: a number of neurons at an output layer, or an activation function used by a neuron at the output layer. The number of neurons at the output layer may be determined based on one or more of the function, an aggregation capability of the first communication apparatus (whether preamble puncturing is supported), or the maximum number of channels allowed for channel aggregation by the first communication apparatus. For a specific determining manner, refer to related descriptions in Embodiment 4. Details are not described herein.

In some scenarios, the output layer structure of the neural network may be determined based on the AI-assisted function (that is, a function requested or enabled by the first communication apparatus). In other words, the output layer structure of the neural network one-to-one corresponds to the AI-assisted function. When an AI-assisted function implemented or supported by the neural network is determined, the output layer structure of this neural network is also determined. For example, a correspondence between the AI-assisted function (that is, the function implemented or supported by the neural network) and the output layer structure of the neural network may be predefined. In some other scenarios, the output layer structure of the neural network may be indicated by the second communication apparatus. For details, refer to descriptions in Embodiment 4. Details are not described herein.

Optionally, the hidden layer structure of the neural network includes one or more of the following: a number of hidden layers, a number of neurons at each layer, an activation function used by a neuron at each layer, or a connection manner between neurons at each layer. The hidden layer structure may be a preset structure or a structure defined in a standard protocol, or may be indicated by the second communication apparatus. For details about an indication manner, refer to related descriptions in Embodiment 2. Details are not described herein.

The parameter of the neural network in this application includes one or more of the following: a bias or a weight of a neuron. A manner of obtaining the parameter of the neural network may be as follows: The first communication apparatus receives the parameter of the neural network from the second communication apparatus. Specifically, for an implementation in which the second communication apparatus exchanges the parameter of the neural network with the first communication apparatus, refer to descriptions in any one of Embodiment 2 to Embodiment 4. Details are not described herein.

It may be understood that all information about the neural network is known after the structure and the parameter of the neural network are known. Therefore, the first communication apparatus may determine the neural network based on the structure and the parameter of the neural network.

S103: The first communication apparatus obtains T observed datasets, and inputs the T datasets into the neural network for processing to obtain a channel aggregation decision result, a channel aggregation joint channel access decision result, or a channel access decision result.

Optionally, the first communication apparatus obtains the T datasets observed by the first communication apparatus within predetermined duration, where one dataset includes one or more pieces of data, and one piece of data corresponds to one type of input information obtained in step S101. Different data in one data set corresponds to different input information. A value of T may be predefined, or specified in a standard protocol, or may be indicated by the second communication apparatus, and is specifically indicated by second indication information in Embodiment 3. For an indication manner, refer to descriptions in Embodiment 3. Details are not described herein. Then, the first communication apparatus may input the T data sets into the neural network generated in step S102 for processing to obtain an output result of the neural network, and select a result from the output result as the decision result. Specific content of the decision result corresponds to the AI-assisted function. For details, refer to the descriptions in the foregoing example 1 to the foregoing example 3.

For example, AI-assisted channel aggregation is used as an example. It is assumed that the input information is classified into two types: basic observation information and extended observation information. For specific content included in each type, refer to related descriptions in Embodiment 3. Details are not described herein. It is assumed that the maximum number of channels allowed for channel aggregation by the first communication apparatus is M, a number of pieces of/length of the basic observation information of the neural network is T', a number of pieces of/length of the extended observation information of the neural network is 1, and T'+1=T. In other words, an input of the neural network includes T' pieces of historical basic observation information and one piece of historical extended observation information of M channels. It is further assumed that basic observation information of the first communication apparatus on the M channels is o, a, and I, and extended observation information is $load_0$ and $load_1$, where o represents carrier sense results of the M channels, and may be represented as $o=\{o^1, o^2, o^3, ..., o^m, ..., o^M\}$, and $o^m$ represents a carrier sense result of an $m^{th}$ channel; a represents channel aggregation statuses, and may be represented as $a=\{a^1, a^2, a^3, ..., a^m, ..., a^M\}$, and $a^m$ represents a channel aggregation status of the $m^{th}$ channel (that is, whether aggregation is performed); I represents duration of (o, a) pairs of the M channels (that is, time at which o and a remain unchanged), and may be represented as $I=\{I^1, I^1, I^2, I^3, ..., I^m, ..., I^M\}$, and $I^m$ represents duration of a $(o^m, a^m)$ pair of the $m^{th}$ channel (that is, time at which $o^m$ and $a^m$ remain unchanged); $load_0$ represents load of a node on the M channels (to be specific, load of the first communication apparatus on the M channels), and may be represented as $load_0=\{load_0^1, load_0^2, load_0^3, ..., load_0^m, ..., load_0^M\}$, and $load_0^m$ represents load of the first communication apparatus on the $m^{th}$ channel; and $load_1$ represents load of another node on the M channels (to be specific, load information of another communication apparatus on the M channels), and may be represented as $load_1=\{load_1^1, load_1^2, load_1^3, ..., load_1^m, ..., load_1^M\}$, and $load_1^m$ represents load of the another communication apparatus on the $m^{th}$ channel. It is further assumed that the number of neurons corresponding to each type of input information is 1. In this case, the input layer of the neural network includes (3*T'+2*1)*M neurons. The T datasets include $(o_t, a_t, I_t)$, where values of t are 1, 2, 3, 4, ..., T'; and $(load_0, load_1)$. An output of the neural network includes expected rewards (for example, expected throughputs) of N channel aggregation modes, that is, $Q(Ch_0)$ to $Q(Ch_{N-1})$, where $Ch_n$ represents a channel aggregation mode. Therefore, the output layer includes N neurons. A value of N is determined based on one or more of the function enabled by the first communication apparatus, the aggregation capability of the first communication apparatus (whether preamble puncturing is supported), or the maximum number of channels allowed for channel aggregation by the first communication apparatus. For details, refer to related descriptions in Embodiment 4. Details are not described herein. It is assumed that the activation function of the neuron at the output layer is a linear (Linear) function, and a manner of selecting the decision result is selecting a channel aggregation mode corresponding to a maximum value of the output layer. The hidden layer structure of the neural network is a 32*8 residual fully connected network, to be specific, the hidden layer includes eight layers of fully connected networks in total, three skip connections (skip connections), and 32 neurons at each layer, and an activation function of each neuron is a rectified linear unit (rectified linear unit, ReLU).

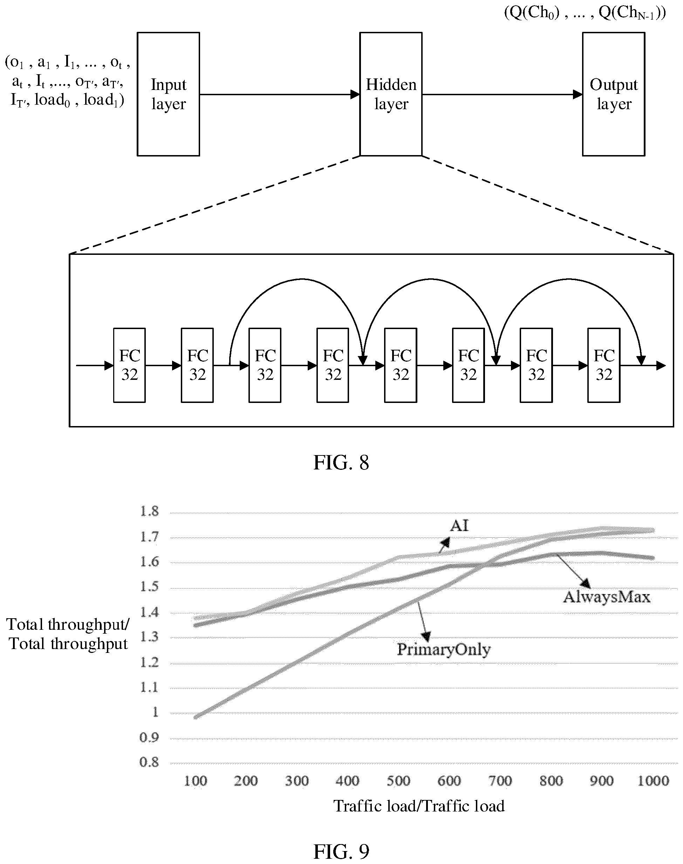

After the foregoing information is determined, a neural network model is uniquely determined. FIG. 8 is a diagram of a neural network model and inputs and outputs of the neural network model according to an embodiment of this application. After the first communication apparatus receives the parameter of the neural network delivered by the second communication apparatus, the first communication apparatus may make, by using the neural network, an inference on historical datasets that are of the M channels and that are observed by the first communication apparatus, and select the channel aggregation mode corresponding to the maximum value of the output layer for transmission.

Optionally, the manner of selecting the foregoing decision result may be determined by the first communication apparatus, or may be indicated by the second communication apparatus. For a specific indication manner, refer to descriptions in Embodiment 4. Details are not described herein.

The first communication apparatus in this embodiment of this application makes the inference and makes a decision by using the neural network that has been trained by another communication apparatus (for example, the second communication apparatus), to implement AI-assisted channel aggregation, AI-assisted channel aggregation joint channel access, or AI-assisted channel access, so as to improve performance. In addition, the first communication apparatus does not need to train the neural network by itself. This can reduce energy consumption of the first communication apparatus. In addition, compared with the conventional technology (that is, a conventional channel aggregation method), this embodiment of this application further has advantages such as high adaptability, low complexity, good scalability, and multi-vendor interworking.

The following describes performance of this embodiment of this application with reference to emulation data.

A simulation scenario is as follows: A STA (denoted as a STA 1) supporting channel aggregation and two STAs (denoted as a STA 2 and a STA 3) supporting only single-channel transmission exist in a network. Load of the STA 1 supporting channel aggregation is fixed, and available channels are a channel 0 and a channel 1, where the channel 0 is a primary channel, that is, the STA 1 may use the channel 0 for transmission or aggregate the channel 0 and the channel 1 for transmission. The two STAs supporting only single-channel transmission operate on the channel 0 and the channel 1, respectively. Load of the STA 2 operating on the channel 0 is fixed, and load of the STA 3 operating on the channel 1 is adjustable. FIG. 9 is a diagram in which total network throughputs of different channel aggregation algorithms vary with traffic load according to an embodiment of this application. FIG. 9 shows cases in which the total network throughputs (total throughputs) of the different channel aggregation algorithms vary as traffic load (traffic load) of the STA 3 on the channel 1 increases. AlwaysMax indicates a case in which a total network throughput varies with the traffic load when the STA 1 supporting channel aggregation always aggregates the channel 0 and the channel 1 for transmission. PrimaryOnly indicates a case in which a total network throughput varies with the traffic load when the STA 1 supporting channel aggregation always uses a primary channel (channel 0) for transmission. AI indicates a case in which a total network throughput varies with the traffic load when the STA 1 supporting channel aggregation performs transmission according to the AI-assisted channel aggregation method provided in this embodiment of this application.

Therefore, it can be learned from simulation results in FIG. 9 that, when the load changes, performance (for example, the total throughput in FIG. 9) of the AI-assisted channel aggregation method provided in this embodiment of this application is better than that of the conventional channel aggregation method (that is, the AlwaysMax algorithm in FIG. 9) and that of the method of always using the primary channel for transmission.

**Embodiment 2**

Embodiment 2 of this application mainly describes an implementation of a function request, to be specific, how a first communication apparatus requests to enable an AI-assisted related function.

Optionally, Embodiment 2 of this application may be implemented in combination with Embodiment 1, or may be implemented separately. This is not limited in this application.

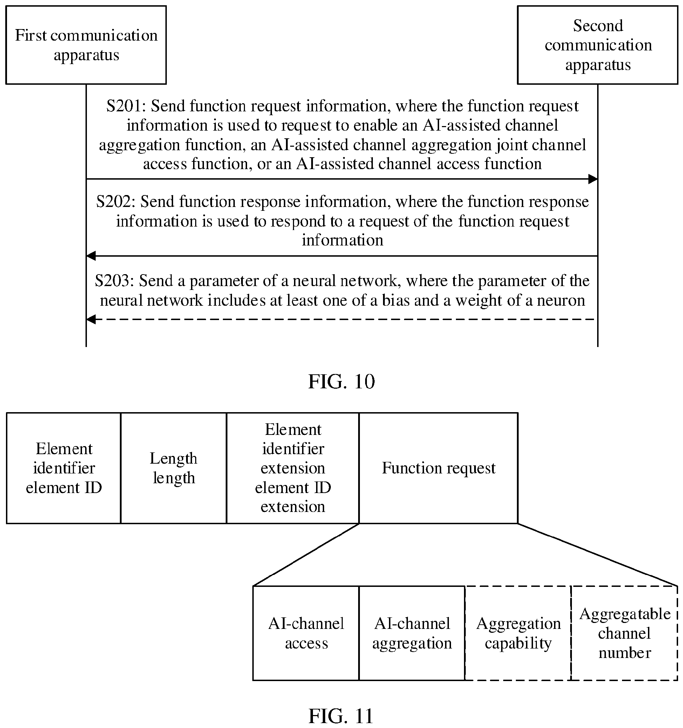

FIG. 10 is a schematic flowchart of an information exchange method according to an embodiment of this application. As shown in FIG. 10, the information exchange method includes but is not limited to the following steps.

S201: A first communication apparatus sends function request information, where the function request information is used to request to enable an AI-assisted channel aggregation function, an AI-assisted channel aggregation joint channel access function, or an AI-assisted channel access function.

Correspondingly, a second communication apparatus receives the function request information.

Optionally, when the first communication apparatus finds that performance of the first communication apparatus in a communication process is poor, for example, a packet loss rate is greater than a preset threshold, or a throughput is lower than a corresponding threshold, or a rate change exceeds a corresponding threshold, or a number of consecutive transmission failures exceeds a corresponding threshold, the first communication apparatus may send the function request information to the second communication apparatus. Alternatively, when the first communication apparatus wants to transmit data in a channel aggregation mode, the first communication apparatus may send the function request information to the second communication apparatus. A trigger condition for sending the function request information by the first communication apparatus is not limited in embodiments of this application. The function request information may be used to request (or indicate) to enable the AI-assisted channel aggregation function, the AI-assisted channel aggregation joint channel access function, or the AI-assisted channel access function. Optionally, the function request information may be further used to request (or indicate) to enable another AI-assisted function, for example, an AI-assisted rate adaptation function or an AI-assisted rate adaptation joint channel access function.

Optionally, a field may be used to request (or indicate) to enable an AI-assisted function, or a bitmap may be used to request (or indicate) to enable an AI-assisted function. This is not limited in embodiments of this application.

In an example, a field is used to request (or indicate) to enable an AI-assisted function. For ease of description, the field is referred to as an AI function field. Certainly, the field may have another name. This is not limited in embodiments of this application. When the AI function field is set to a first value, the AI-assisted channel aggregation function is requested (or indicated) to be enabled. When the AI function field is set to a second value, the AI-assisted channel access function is requested (or indicated) to be enabled. When the AI function field is set to a third value, the AI-assisted channel aggregation joint channel access function is requested (or indicated) to be enabled. When the AI function field is set to another value (a value other than the first value, the second value, and the third value), it indicates that the field is a reserved bit. Alternatively, when the AI function field is set to another value (a value other than the first value, the second value, and the third value), the another AI-assisted function is requested (or indicated) to be enabled. For example, when the AI function field is set to a fourth value, the AI-assisted rate adaptation function is requested (or indicated) to be enabled; or when the AI function field is set to a fifth value, the AI-assisted rate adaptation joint channel access function is requested (or indicated) to be enabled. The first value, the second value, and the third value are different from each other, and are all natural numbers.

For example, it is assumed that a length of the AI function field is 2 bits (bits), and the first value, the second value, and the third value are any three different values in decimal 0, 1, 2, and 3. For example, the first value is 0, the second value is 1, and the third value is 2. In this case, when the AI function field is set to 0, the AI-assisted channel aggregation function is requested to be enabled. When the AI function field is set to 1, the AI-assisted channel access function is requested to be enabled. When the AI function field is set to 2, the AI-assisted channel aggregation joint channel access function is requested to be enabled. When the AI function field is set to 3, it indicates that the field is a reserved bit.

For another example, it is assumed that a length of the AI function field is 3 bits (bits), and the first value, the second value, and the third value are any three different values in decimal 0, 1, 2, 3, 4, 5, 6, and 7. For example, the first value, the second value, and the third value are 0, 1, and 2 respectively. In this case, when the AI function field is set to 3 to 7 (that is, 3, 4, 5, 6, and 7), it indicates that the field is a reserved bit. Alternatively, when the AI function field is set to 3, the AI-assisted rate adaptation function is requested to be enabled. When the AI function field is set to 4, the AI-assisted rate adaptation joint channel access function is requested to be enabled. When the AI function field is set to 5 to 7 (that is, 5, 6, 7), it indicates that the field is a reserved bit.

It should be understood that the length of the AI function field is merely an example. In actual implementation, the AI function field may be shorter or longer. The length of the AI function field is not limited in embodiments of this application. For example, the length of the AI function field is 1 bit. When the bit is set to 0, the AI-assisted channel aggregation function is requested to be enabled. When the bit is set to 1, the AI-assisted channel aggregation joint channel access function is requested to be enabled. For another example, the length of the AI function field is 4 bits, the first value to the fifth value are any five integers that are different from each other in decimal 0 to 15 (that is, 0, 1, 2, 3, ..., 14, and 15), and other values indicate reservation.

In another example, a bitmap (bitmap) is used to request (or indicate) to enable an AI-assisted function. For ease of description, the bitmap is referred to as an AI function bitmap. Certainly, the bitmap may have another name. This is not limited in embodiments of this application. One bit in the AI function bitmap corresponds to one function. When a bit in the AI function bitmap is set to 1, a function corresponding to the bit is requested (or indicated) to be enabled. Certainly, when a bit in the AI function bitmap is set to 0, a function corresponding to the bit may be requested (or indicated) to be enabled.

For example, it is assumed that a length of the AI function bitmap is 4 bits. In this case, when the AI function bitmap is set to 0100 (binary), the AI-assisted channel aggregation function is requested to be enabled. When the AI function bitmap is set to 0010 (binary), the AI-assisted channel access function is requested to be enabled. When the AI function bitmap is set to 0001 (binary), the AI-assisted channel aggregation joint channel access function is requested to be enabled. When the AI function bitmap is set to 0000 and 1000 (binary), it indicates that the bitmap is a reserved bit or indicates that the AI-assisted channel aggregation function, the AI-assisted channel access function, and the AI-assisted channel aggregation joint channel access function are not enabled.

It may be understood that the foregoing indication manner is merely an example, and there may be another indication manner. For example, it is assumed that a length of the AI function bitmap is 2 bits. In this case, when the AI function bitmap is set to 01 (binary), the AI-assisted channel aggregation function is requested to be enabled. When the AI function bitmap is set to 10 (binary), the AI-assisted channel access function is requested to be enabled. When the AI function bitmap is set to 11 (binary), the AI-assisted channel aggregation joint channel access function is requested to be enabled. When the AI function bitmap is set to 00 (binary), it indicates that the bitmap is a reserved bit or indicates that the AI-assisted channel aggregation function, the AI-assisted channel access function, and the AI-assisted channel aggregation joint channel access function are not enabled.

It should be understood that the length of the AI function bitmap is merely an example. In actual implementation, the AI function bitmap may be longer or shorter. The length of the AI function bitmap is not limited in embodiments of this application. For example, the length of the AI function bitmap is 3 bits, 8 bits, or 16 bits.

Optionally, if the function request information is used to request (or indicate) to enable the AI-assisted channel aggregation function or the AI-assisted channel aggregation joint channel access function, the function request information may further include fourth indication information. The fourth indication information may indicate a maximum number of channels allowed for channel aggregation by the first communication apparatus. Certainly, the function request information may not include the fourth indication information. For example, the function request information and the fourth indication information are separately sent. For example, the first communication apparatus may send the fourth indication information before step S201, or may send the fourth indication information after step S202. Specifically, the fourth indication information may be sent after function response information in step S202 indicates that a request of the function request information is agreed. It should be understood that neither a sending occasion nor a sending manner of the fourth indication information is limited in embodiments of this application.

Optionally, the maximum number of channels allowed for channel aggregation by the first communication apparatus may be determined based on a maximum channel bandwidth supported by the first communication apparatus. In a possible implementation, as defined in a standard protocol, a maximum number of channels allowed for channel aggregation by a node (denoted as $ChN_{max}$) is equal to a quotient obtained by dividing a maximum channel bandwidth supported by the node ($BW_{max}$) by a subchannel bandwidth (20 MHz). That is, $ChN_{max}=BW_{max}/20$ MHz. For example, it assumed that the maximum channel bandwidth of the first communication apparatus is 80 MHz (for a channel division manner, refer to an existing standard, for example, the 802.11be standard or the 802.11ax standard; and in this application, subchannels are obtained through division at a granularity of a 20 MHz bandwidth). In this case, the maximum number of channels allowed for channel aggregation by the first communication apparatus is 4. In other words, the number indicated by the fourth indication information is 4.

It may be understood that the function request information may not indicate the maximum number of channels allowed for channel aggregation by the first communication apparatus, but indicate the maximum channel bandwidth supported by the first communication apparatus. Alternatively, the maximum channel bandwidth supported by the first communication apparatus may not be indicated in the function request information, but is indicated in another procedure or frame. For example, in a process in which the first communication apparatus associates with the second communication apparatus, or in a process in which a connection is established between the first communication apparatus and the second communication apparatus, the first communication apparatus may include the maximum channel bandwidth supported by the first communication apparatus in a request frame used for association (for example, an association request frame or a reassociation request frame) or a request frame for establishing the connection.

Optionally, "AI-assisted channel aggregation" in this application may also cover or be applicable to an AI-assisted multiple resource units (Multiple RUs, MRU) combination scenario, that is, an AI method is used to determine resource units (resource units, RUs) or MRUs that are used together for transmission. Multiple RUs support implementation with a preamble puncturing (preamble puncturing) technology. It may be understood that, in a subsequent embodiment, for ease of description, the AI-assisted MRU combination scenario is described as AI-assisted channel aggregation, and certainly may equivalently alternatively be AI-assisted MRU combination. Therefore, if the function request information is used to request (or indicate) to enable the AI-assisted channel aggregation function or the AI-assisted channel aggregation joint channel access function, the function request information may further include fifth indication information. The fifth indication information may indicate whether the first communication apparatus supports preamble puncturing (preamble puncturing), or indicate whether aggregation of non-adjacent channels is supported.

Certainly, the function request information may not include the fifth indication information. In a possible implementation, whether the first communication apparatus supports preamble puncturing may be determined based on a type of the first communication apparatus (the second communication apparatus may learn of the type of the first communication apparatus when establishing the connection to the first communication apparatus), and does not need to be indicated. For example, a communication apparatus supporting only 802.11ac and an earlier standard does not support preamble puncturing. However, a communication apparatus supporting 802.11ax and a later standard supports preamble puncturing by default. In other words, if the first communication apparatus is a device supporting 802.11ax and the later standard, the first communication apparatus supports preamble puncturing by default. In another possible implementation, the fifth indication information and the function request information are separately sent. In other words, the fifth indication information is not carried in the function request information for sending. For example, the first communication apparatus may send the fifth indication information before step S201, or may send the fifth indication information after step S202. Specifically, the fifth indication information may be sent after the function response information in step S202 indicates that the request of the function request information is agreed. It should be understood that neither a sending occasion nor a sending manner of the fifth indication information is limited in embodiments of this application.

It may be understood that if the function request information is used to request (or indicate) to enable the AI-assisted channel access function, the first communication apparatus may not need to notify the second communication apparatus of an aggregation capability of the first communication apparatus and the maximum number of channels allowed for channel aggregation. In other words, the first communication apparatus does not need to send the fourth indication information and the fifth indication information, or the function request information does not carry the fourth indication information and the fifth indication information.

In other words, when a function that is requested to be enabled by the function request information is a function related to channel aggregation (that is, AI-assisted channel aggregation and AI-assisted channel aggregation joint channel access), the aggregation capability of the first communication apparatus further needs to be indicated, that is, whether preamble puncturing is supported. In addition, the maximum number of channels allowed for channel aggregation by the first communication apparatus may be further reported. When the function that is requested to be enabled by the function request information is the AI-assisted channel access function, the aggregation capability and the number of channels do not need to be indicated because a number of channels used for channel access is 1. Therefore, AI-assisted channel access in this application may be understood as a special case of AI-assisted channel aggregation joint channel access. In other words, AI-assisted channel access is a case in which a number of aggregated channels is 1 in AI-assisted channel aggregation joint channel access.

In this embodiment of this application, the first communication apparatus notifies the second communication apparatus of the maximum number of channels allowed for channel aggregation by the first communication apparatus and whether preamble puncturing is supported, so that the second communication apparatus determines, based on the maximum number of channels and whether preamble puncturing is supported, a structure, a parameter, and the like of a neural network corresponding to the function that the first communication apparatus requests to enable. For details about how to determine the structure of the neural network based on the maximum number of channels and whether preamble puncturing is supported, refer to related descriptions in Embodiment 1 or Embodiment 3 and Embodiment 4. For details about how to determine the parameter of the neural network based on the maximum number of channels and whether preamble puncturing is supported, refer to the following descriptions in embodiments of this application.

In a possible implementation, the function request information may be carried in a new information element (information element, IE). In other words, in this embodiment of this application, a new information element may be defined to carry the function request information. For example, FIG. 11 is a diagram of a frame format of an information element according to an embodiment of this application. As shown in FIG. 11, the information element includes but is not limited to an element identifier (element ID) field, a length (length) field, an element identifier extension (element ID extension) field, and a function request field (that is, the foregoing function request information). The function request field may include an AI-channel access field and an AI-channel aggregation field. In an example, both lengths of the AI-channel access field and the AI-channel aggregation field are 1 bit. When the AI-channel access field is set to a first value, the AI-assisted channel access function is requested or indicated to be enabled. When the AI-channel aggregation field is set to a first value, the AI-assisted channel aggregation function is requested or indicated to be enabled. When the AI-channel access field is set to a first value and the AI-channel aggregation field is also set to the first value, the AI-assisted channel aggregation joint channel access function is requested or indicated to be enabled. The first value is 1, and the second value is 0; or the first value is 0, and the second value is 1.

Optionally, the function request field in FIG. 11 may further include one or more of the following: an aggregation capability field (that is, the foregoing fifth indication information) or an aggregatable channel number field (that is, the foregoing fourth indication information). The aggregation capability field indicates whether preamble puncturing is supported or whether aggregation of non-adjacent channels is supported. The aggregatable channel number field indicates a maximum number of channels allowed for channel aggregation.

It should be understood that names, lengths, and arrangement sequences of the fields/subfields shown in FIG. 11 are merely examples, and are not limited in embodiments of this application. The information element shown in FIG. 11 is merely an example. In actual application, the information element may include more or fewer fields or subfields.

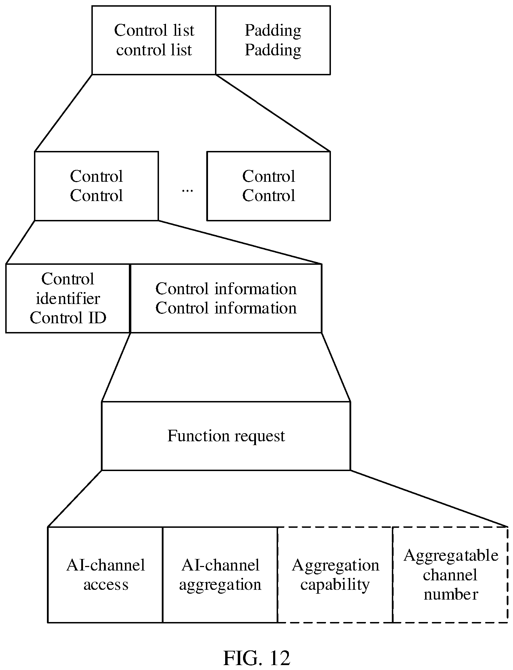

In another possible implementation, the function request information may be carried in an aggregated control (aggregated control, A-control) subfield of a high throughput (high throughput, HT) control (control) field. FIG. 12 is a diagram of a frame format of an A-control subfield according to an embodiment of this application. As shown in FIG. 12, the A-control subfield includes but is not limited to a function request field (that is, the foregoing function request information). The function request field is located in control information (control information) of a control (control) subfield, and the control subfield further includes a control identifier (control ID). For an implementation of the function request field, refer to the related descriptions in FIG. 11. Details are not described herein again.

It should be understood that names, lengths, and an arrangement sequence of the fields/subfields shown in FIG. 12 are merely examples, and are not limited in embodiments of this application. The A-control subfield shown in FIG. 12 is merely an example. In actual application, the A-control subfield may include more or fewer subfields.

Optionally, the function request information may be carried in a function request frame. For example, the information element (for example, the frame format shown in FIG. 11) or the A-control subfield (for example, the frame format shown in FIG. 12) that carries the function request information is located in the function request frame. The function request frame may be a newly defined frame, or may be a frame that reuses a previous standard, for example, a beacon frame (beacon frame) or an action frame (action frame). When the function request frame is a frame that reuses a previous standard, the function request frame may further include indication information, used to distinguish whether the function request frame maintains an original function or implements a function (referred to as a new function or an extended function) in embodiments of this application. In addition, if the function request frame is a frame that reuses a previous standard, the function request information may not only be carried in a newly defined information element or an A-control subfield of the function request frame, and may be further carried in a reserved field of the function request frame (if the function request frame has the reserved field).

S202: The second communication apparatus sends the function response information, where the function response information is used to respond to the request of the function request information.

Correspondingly, the first communication apparatus receives the function response information.

Optionally, after the second communication apparatus receives the function request information, the second communication apparatus may send the function response information to the first communication apparatus, to respond to (that is, agree with or reject) the request of the function request information. The function response information may exist in a form of a field. For example, a length of the function response information is 1 bit. When the bit is set to 1, it indicates that the request of the function request information is agreed; or when the bit is set to 0, it indicates that the request of the function request information is rejected. Alternatively, when the bit is set to 0, it indicates that the request of the function request information is agreed; or when the bit is set to 1, it indicates that the request of the function request information is rejected. In this embodiment of this application, whether the function response information is set to 1 or 0 indicates that the request of the function request information is agreed is not limited.

Optionally, the function response information may be carried in an information element, an A-control subfield, or a reserved field of a function response frame. The function response frame may be a newly defined frame, or may be a frame that reuses a previous standard, for example, an action frame (action frame). When the function response frame is a frame that reuses a previous standard, the function response frame may further include indication information, used to distinguish whether the function response frame is used to respond to an original function or respond to a function (that is, an extended function) in embodiments of this application.

Optionally, when the second communication apparatus agrees with the request of the function request information, the second communication apparatus may send the parameter of the neural network to the first communication apparatus. In a possible implementation, the second communication apparatus may send the function response information carrying the parameter of the neural network. It may be understood that if the function response information carries the parameter (which may be all parameters or some parameters herein) of the neural network, it may indicate that the second communication apparatus agrees with the request of the function request information. In this case, there is no need to use another field or bit (in the function response information) to indicate that the request of the function request information is agreed. Certainly, alternatively, even if the function response information carries the parameter (which may be all parameters or some parameters herein) of the neural network, another field or bit may be used in the function response information to indicate that the request of the function request information is agreed. This is not limited in embodiments of this application.

In another possible implementation, the second communication apparatus may separately send the parameter of the neural network. To be specific, when the function response information indicates that the request of the function request information is agreed, the method shown in FIG. 10 may further include step S203.

S203: The second communication apparatus sends the parameter of the neural network, where the parameter of the neural network includes at least one of a bias and a weight of a neuron.

In this embodiment of this application, the parameter of the neural network is separately sent, and a meaning of the parameter is clear and is not easily confused.

In still another possible implementation, the foregoing two possible implementations may be used in combination. To be specific, some parameters of the neural network, for example, the weight of the neuron, may be carried in the function response information, and the other parameters of the neural network, for example, the bias of the neuron, are separately sent.

The neural network in this embodiment of this application corresponds to the function that is requested by the function request information. In other words, the neural network is used to implement or support the function that is requested by the function request information.

The second communication apparatus may determine, based on the function that is requested to be enabled by the function request information, the maximum number of channels allowed for channel aggregation by the first communication apparatus, and whether the first communication apparatus supports preamble puncturing, the parameter of the neural network corresponding to the function that the first communication apparatus requests to enable. Specifically, the second communication apparatus may obtain a plurality of groups of neural network parameters through training for different quantities of channels in channel aggregation and whether preamble puncturing is supported. Each group of parameters corresponds to a different maximum number of channels in channel aggregation and whether preamble puncturing is supported. Therefore, in this application, the parameter of the neural network sent by the second communication apparatus to the first communication apparatus corresponds to at least one of the function that the first communication apparatus requests to enable, the maximum number of channels allowed for channel aggregation, or the aggregation capability (that is, whether preamble puncturing is supported) of the first communication apparatus.

Optionally, when the function response information indicates that the request of the function request information is agreed or the second communication apparatus agrees with the request of the function request information, the function response information may further include indication information (which is denoted as sixth indication information for ease of distinguishing between different indication information in this specification). The sixth indication information may indicate a hidden layer structure of the neural network.

Alternatively, the second communication apparatus may separately send the hidden layer structure of the neural network to the first communication apparatus. In other words, after step S202, if the function response information indicates that the request of the function request information is agreed, the second communication apparatus may further send the sixth indication information to the first communication apparatus, to indicate the hidden layer structure of the neural network.

In an example, the hidden layer structure of the neural network is one of a plurality of predefined hidden layer structures. Each hidden layer structure may be represented by using one or more pieces of the following information: a number of hidden layers, a number of neurons at each layer, an activation function used by a neuron at each layer, or a connection manner between neurons at each layer. The plurality of predefined hidden layer structures may be specified in a standard protocol, or may be notified by the second communication apparatus to the first communication apparatus in advance, for example, the first communication apparatus and the second communication apparatus exchange the plurality of predefined hidden layer structures in the process of establishing the connection (if the first communication apparatus and the second communication apparatus are respectively a STA and an AP, the process of establishing the connection may refer to an association process). The sixth indication information may specifically indicate which one of the plurality of predefined hidden layer structures is the hidden layer structure of the neural network. For example, three hidden layer structures are predefined, and are respectively identified by using a mode 1 (mode 1), a mode 2 (mode 2), and a mode 3 (mode 3). If the sixth indication information indicates the mode 2, it indicates that the hidden layer structure of the neural network is a hidden layer structure identified in the mode 2 (that is, one or more of a number of hidden layers, a number of neurons at each layer, an activation function used by a neuron at each layer, or a connection manner between neurons at each layer).

It may be understood that, in this embodiment of this application, the plurality of hidden layer structures are predefined, and indication information indicates which hidden layer structure in the plurality of predefined hidden layer structures is used, so that a number of bits can be reduced, and overheads can be reduced.

In another example, the hidden layer structure of the neural network includes one or more of the following: a number of hidden layers, a number of neurons at each layer, an activation function used by a neuron at each layer, or a connection manner between neurons at each layer. Therefore, the sixth indication information may indicate one or more of the number of hidden layers, the number of neurons at each layer, the activation function used by the neuron at each layer, or the connection manner between the neurons at each layer.

It may be understood that, in this embodiment of this application, information included in the hidden layer structure is indicated, so that the hidden layer structure of the neural network can be more flexibly designed, and is not limited to the plurality of predefined hidden layer structures.

Alternatively, a part of the hidden layer structure of the neural network may be carried in the function response information, for example, the number of hidden layers and the number of neurons at each layer. In addition, the other part of the hidden layer structure of the neural network is separately sent, for example, the activation function used by the neuron at each layer and the connection manner between the neurons at each layer.

Optionally, after the first communication apparatus receives the function response information, if the function response information indicates that the request of the function request information is agreed, the first communication apparatus may enable the function that is requested to be enabled by the function request information, and perform the AI-assisted channel aggregation method shown in Embodiment 1.

Optionally, when the second communication apparatus does not agree with the request of the function request information, in other words, the function response information indicates that the request of the function request information is rejected, after receiving the function response information, the first communication apparatus may perform communication in a conventional channel aggregation mode and conventional channel access. Conventional channel aggregation includes but is not limited to two types of methods: static aggregation and dynamic aggregation, for example, an AlwaysMax algorithm. For specific implementation of the algorithm, refer to the conventional technology. Conventional channel access includes but is not limited to carrier sense multiple access with collision avoidance (carrier sense multiple access with collision avoidance, CSMA/CA).

The first communication apparatus in this embodiment of this application sends the function request information to the second communication apparatus to request to enable an AI-assisted related function, and the second communication apparatus replies with the corresponding function response information, so that the first communication apparatus determines, based on the function response information, whether to enable the AI-assisted related function. This can provide a basis for the first communication apparatus to implement AI-assisted channel aggregation, AI-assisted channel aggregation joint channel access, or AI-assisted channel access.

In an optional embodiment, the second communication apparatus may alternatively initiate a function request. Specifically, the second communication apparatus sends function request information, where the function request information is used to request or indicate to enable any one of the following functions: an AI-assisted channel aggregation function, an AI-assisted channel aggregation joint channel access function, an AI-assisted channel access function, an AI-assisted rate adaptation function, or an AI-assisted rate adaptation joint channel access function. After receiving the function request information, the first communication apparatus may reply with response information. The response information may indicate that a request of the function request information is agreed or rejected, or the response information may be used to acknowledge that the function request information is received. For example, the response information is an acknowledgment (acknowledgment, ACK) frame or a block acknowledgment (block ACK, BA).

Optionally, the function request information may further carry a parameter of a neural network.

Optionally, the function request information may further include sixth indication information, where the sixth indication information indicates a hidden layer structure of the neural network.

Optionally, the function request information may be carried in a broadcast frame, for example, a beacon (beacon) frame. Certainly, the function request information may alternatively be carried in a unicast frame.

Optionally, the function response information may carry fourth indication information, where the fourth indication information indicates a maximum number of channels allowed for channel aggregation by a first communication apparatus.

Optionally, the function response information may further carry fifth indication information, where the fifth indication information indicates whether the first communication apparatus supports preamble puncturing.

In this embodiment of this application, a node with a strong capability (for example, an AP or the second communication apparatus) may send function request information, to request or indicate one or more resource-limited nodes (for example, a STA or the first communication apparatus) to enable an AI-assisted related function. This can not only provide a basis for the resource-limited node to implement AI-assisted channel aggregation, AI-assisted channel aggregation joint channel access, or AI-assisted channel access, but also enable AI-assisted related functions of a plurality of resource-limited nodes through one interaction, thereby reducing air interface resources.

## Embodiment 3

Embodiment 3 of this application mainly describes a frame format indicated by input information, to be specific, how a first communication apparatus and a second communication apparatus reach an agreement on input information of a neural network.

Optionally, Embodiment 3 of this application may be implemented in combination with one or more of Embodiment 1 and Embodiment 2, or may be implemented separately. This is not limited in this application.

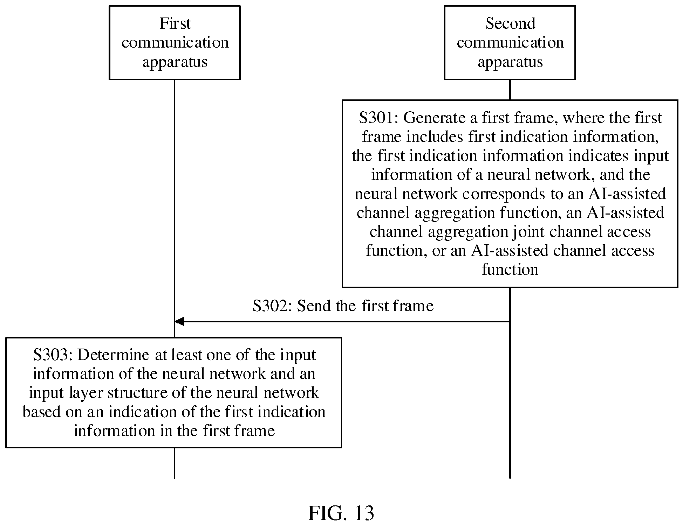

FIG. 13 is another schematic flowchart of an information exchange method according to an embodiment of this application. As shown in FIG. 13, the information exchange method includes but is not limited to the following steps.

S301: A second communication apparatus generates a first frame, where the first frame includes first indication information, the first indication information indicates input information of a neural network, and the neural network corresponds to an AI-assisted channel aggregation function, an AI-assisted channel aggregation joint channel access function, or an AI-assisted channel access function.

S302: The second communication apparatus sends the first frame.

Correspondingly, a first communication apparatus receives the first frame. Optionally, after receiving the first frame, the first communication apparatus replies with acknowledgment information such as an acknowledgment (acknowledgment, ACK) frame or a block acknowledgment (block ACK, BA) to the second communication apparatus, to acknowledge that the first frame has been received.

The neural network in this embodiment of this application corresponds to the AI-assisted channel aggregation function, the AI-assisted channel aggregation joint channel access function, or the AI-assisted channel access function. For details, refer to the related descriptions in Embodiment 1. Details are not described herein again.

Optionally, the input information of the neural network may be classified into two types. One type may be referred to as basic observation information, and the other type may be referred to as extended observation information. It should be understood that the two types of input information may also have other names, for example, first type of information and second type of information. This is not limited in embodiments of this application. The basic observation information may include but is not limited to one or more of the following: a carrier sense result, a channel aggregation status, channel access behavior, a queuing delay, an access delay, a data packet transmission result, duration of the carrier sense result, duration of channel aggregation, or duration of the channel access behavior. The extended observation information may include but is not limited to one or more of the following: a packet loss rate, duration from a current moment to a moment of last successful transmission of the first communication apparatus, duration from the current moment to a moment of last successful transmission of another communication apparatus on a channel, load information of the first communication apparatus, or load information of the another communication apparatus on the channel. The another communication apparatus herein is a communication apparatus other than the first communication apparatus.

Certainly, alternatively, the input information of the neural network may not be classified, that is, the input information of the neural network includes but is not limited to one or more of the following: the carrier sense result, a receive power, the channel aggregation status, the channel access behavior, the data packet transmission result, the duration of the carrier sense result, the duration of channel aggregation, the duration of the channel access behavior, the packet loss rate, the duration from the current moment to the moment of last successful transmission of the first communication apparatus, the duration from the current moment to the moment of last successful transmission of the another communication apparatus on the channel, the load information of the first communication apparatus, or the load information of the another communication apparatus on the channel. Whether the input information of the neural network is classified is not limited in embodiments of this application.

Optionally, the first indication information may indicate specific input information of the neural network, or indicate information included at an input layer of the neural network, or indicate specific observation information included in an input of the neural network.

Optionally, in addition to the first indication information, the first frame may further include second indication information. The second indication information may indicate a number (that is, a quantity) of pieces of input information of the neural network, or indicate a number or a length of the input information of the neural network within predetermined duration. The second indication information may be further understood as indicating a historical number of pieces of input information included in the neural network, a total length of the input information, or a length of each type of input information. Further optionally, if the input information of the neural network is classified into two types: one type is the basic observation information, and the other type is the extended observation information, the second indication information may be divided into two parts, where one part indicates a number (that is, a quantity) of pieces of basic observation information of the neural network, the other part indicates a number (that is, a quantity) of pieces of extended observation information of the neural network.

Optionally, the first frame may further include information A, where the information A indicates a dimension of the input information, or indicates a number of neurons corresponding to the input information. The dimension of the input information may be equal to the number of neurons corresponding to the input information. For example, if a dimension of input information is two dimensions, a number of neurons corresponding to the input information is also two. In an example, the information A may indicate a dimension of each type of input information or a number of neurons corresponding to each type of input information. It is assumed that there are three types of input information indicated by the first indication information, the information A needs to separately indicate dimensions (or corresponding numbers of neurons) of the three types of input information. In another example, to simplify an indication of the information A or reduce a number of bits of the information A, it is predefined that each type of input information has an equal dimension or each type of input information corresponds to an equal number of neurons. In this case, the information A indicates a dimension of any type of input information or a corresponding number of neurons.

Optionally, the first frame may further include information B, where the information B indicates whether the first indication information exists. If the input information of the neural network is classified into two types: one type is the basic observation information, and the other type is the extended observation information, the information B may include two parts, denoted as information B1 and information B2. The information B1 may indicate whether the basic observation information exists, and the information B2 may indicate whether the extended observation information exists.

Optionally, one or more of the first indication information, the second indication information, the information A, or the information B may be carried in a same information element or A-control subfield of the first frame, or may be carried in different information elements or A-control subfields of the first frame. This is not limited in embodiments of this application. The information element herein may be newly defined. The first frame may be a newly defined frame, or may be a frame that reuses a previous standard. This is not limited in embodiments of this application. When the first frame is a frame that reuses a previous standard, that the information B indicates that the first indication information exists may be understood as that the first frame is used to implement a function (or an extended function) in this embodiment of this application, and that the information B indicates that the first indication information does not exist may be understood as that the first frame maintains an original function (that is, a function in the previous standard). Certainly, when the information B indicates that the first indication information does not exist, the first frame may not include at least one of the information A or the second indication information.

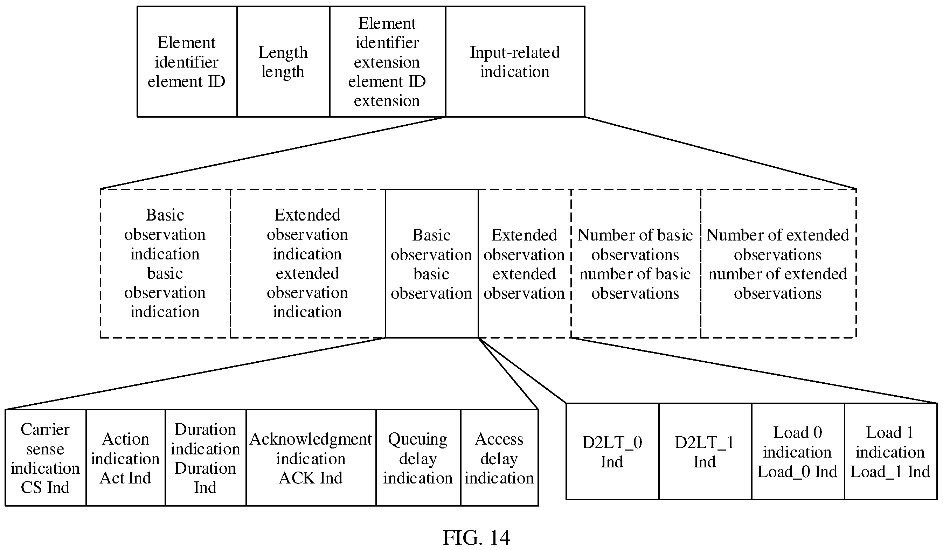

In an example, the input information of the neural network is classified into the basic observation information and the extended observation information. FIG. 14 is a diagram of another frame format of an information element according to an embodiment of this application. As shown in FIG. 14, the information element includes but is not limited to an element identifier (element ID) field, a length (length) field, an element identifier extension (element ID extension) field, and an input-related indication field. The input-related indication field includes a basic observation (basic observation) field, and optionally further includes one or more of the following fields: a basic observation indication (basic observation indication) field (that is, the foregoing information B1), an extended observation indication (extended observation indication) field (that is, the foregoing information B2), an extended observation (extended observation) field, a number of basic observations (number of basic observations) field, or a number of extended observations (number of extended observations) field. The first indication information may be implemented by using the basic observation field. If the extended observation field exists, the first indication information may alternatively be implemented by using both the basic observation field and the extended observation field. The second indication information may be implemented by using the number of basic observations field. If the extended observation field exists, the first indication information may alternatively be implemented by using both the number of basic observations field and the number of extended observations field.

The basic observation field indicates which basic observation information is included in the input information of the neural network. The basic observation field includes but is not limited to one or more of the following subfields: carrier sense (carrier sense, CS) indication (CS Ind), action (action) indication (Act Ind), duration (Duration) indication (Duration Ind), acknowledgment (acknowledgment, ACK) indication (ACK Ind), a queuing delay indication, or an access delay indication. The Act Ind subfield indicates whether an input of the neural network includes action information, where the action information herein corresponds to enabling an AI-assisted related function. If the AI-assisted channel aggregation function is used, the Act Ind subfield indicates whether the input of the neural network includes the channel aggregation status. If the AI-assisted channel aggregation joint channel access function is used, the Act Ind subfield indicates whether the input of the neural network includes the channel aggregation status and the channel access behavior. If the AI-assisted channel access function is used, the Act Ind subfield indicates whether the input of the neural network includes the channel access behavior. The Duration Ind subfield indicates whether the input of the neural network includes time in which a carrier sense result and action information on each channel remain unchanged.

The CS Ind subfield, the queuing delay indication, the access delay indication, and the ACK Ind subfield respectively indicate whether the input information of the neural network includes the carrier sense result, the queuing delay, the access delay, and the data packet transmission result.

The extended observation field indicates which extended observation information is included in the input information of the neural network. The extended observation information may be information inferred by a node based on the basic observation information, for example, a packet loss rate, duration from the current moment to a moment of last successful transmission of the node, or load. The extended observation field includes but is not limited to one or more of the following subfields: D2LT_0 Ind, D2LT_1 Ind, a load 0 indication (Load_0 Ind), or a load 1 indication (Load_1 Ind). The D2LT_0 Ind subfield indicates whether the input of the neural network includes the duration from the current moment to the moment of last successful transmission of the node, to be specific, whether the input of the neural network includes the duration from the current moment to the moment of last successful transmission of the first communication apparatus. The duration may be obtained by using an ACK of the node. The D2LT_1 Ind subfield indicates whether the input of the neural network includes duration from the current moment to a moment of last successful transmission of another node on a channel, to be specific, whether the input of the neural network includes the duration from the current moment to the moment of last successful transmission of the another communication apparatus on the channel. The duration may be obtained by listening to an ACK that does not belong to the node. The Load_0 Ind subfield indicates whether the input of the neural network includes load information of the node, to be specific, whether the input of the neural network includes the load information of the first communication apparatus. The load information may be obtained based on transmission behavior of the node. The Load_1 Ind subfield indicates whether the input of the neural network is load information of the another node on the channel, to be specific, whether the input of the neural network includes the load information of the another communication apparatus on the channel. The load information may be obtained through carrier sense.

It may be understood that the basic observation field may also be understood as a bitmap, and one bit corresponds to one type of basic observation information. When a bit is set to 1, it indicates that the input information of the neural network includes basic observation information corresponding to the bit. Similarly, the extended observation field may also be understood as a bitmap, and one bit corresponds to one type of extended observation information. In embodiments of this application, whether the value 1 indicates inclusion or the value 0 indicates inclusion is not limited.

The basic observation indication field (that is, the foregoing information B1) indicates whether the basic observation field is included. In this embodiment of this application, the basic observation indication field is set to a first value, to indicate that the basic observation field is included. For example, the first value herein is 1, or the first value is 0.

The extended observation indication field (that is, the foregoing information B2) indicates whether the extended observation field is included. When the extended observation indication field is set to a first value, it indicates that the extended observation field is included. When the extended observation indication field is set to a second value, it indicates that the extended observation field is not included. The first value is 1, and the second value is 0; or the first value is 0, and the second value is 1.

It may be understood that, in this embodiment of this application, the input information of the neural network is classified into the basic observation information and the extended observation information for hierarchical indication, so that signaling overheads can be reduced. For example, if an AI-assisted function (for example, the AI-assisted channel access function) only needs to perform inference and decision-making based on the basic observation information, the extended observation indication field is set to a second value (for example, 0), so that the extended observation field can be omitted.

The number of basic observations field indicates a number (that is, a quantity) of pieces of or a length of the basic observation information of the neural network within predetermined duration. In other words, the number of basic observations field indicates how many pieces of basic observation information in the past are included in the input of the neural network.

The number of extended observations field indicates a number (that is, a quantity) of pieces of or a length of the extended observation information of the neural network within predetermined duration. In other words, the number of extended observations field indicates how many pieces of extended observation information in the past are included in the input of the neural network.

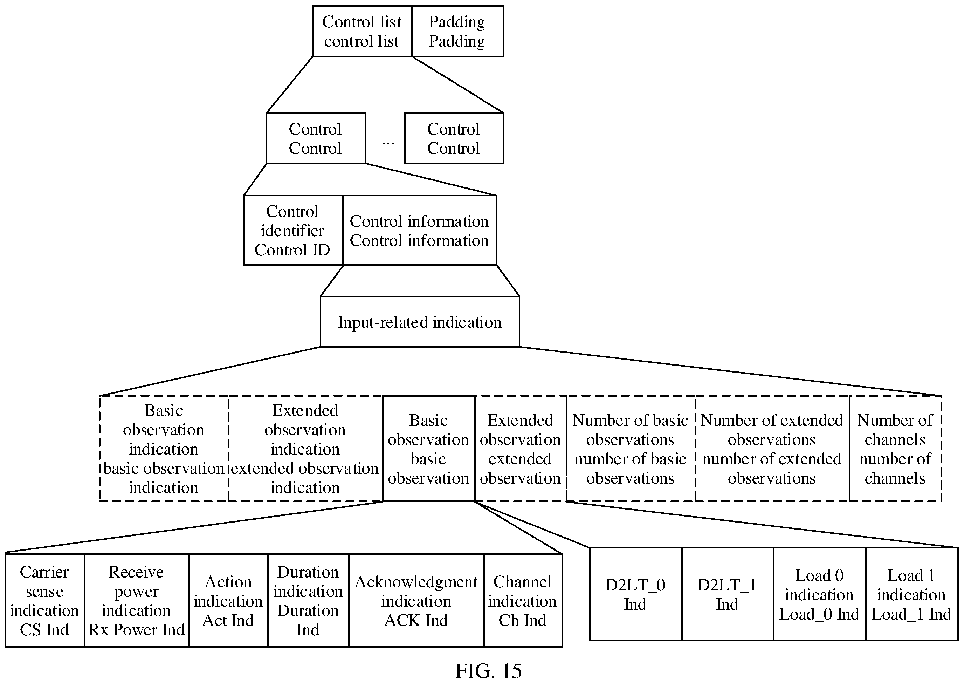

In another example, the input information of the neural network is classified into the basic observation information and the extended observation information. FIG. 15 is a diagram of another frame format of an A-control subfield according to an embodiment of this application. As shown in FIG. 15, the A-control subfield includes but is not limited to an input-related indication field. For implementation of the input-related indication field, refer to FIG. 14. Details are not described herein again.

It should be understood that names of the fields or subfields included in FIG. 14 and FIG. 15 are merely examples, and the fields or subfields may have other names. This is not limited in embodiments of this application. It should be further understood that arrangement sequences of the fields in FIG. 14 and FIG. 15 are merely examples. This is not limited in embodiments of this application.

Optionally, the first frame may further include a parameter of the neural network. Alternatively, the method shown in FIG. 13 further includes: The second communication apparatus sends the parameter of the neural network. The parameter of the neural network includes at least one of a bias and a weight of a neuron. Alternatively, the first frame includes some parameters of the neural network, for example, a weight of a neuron. The other parameters are separately sent by the second communication apparatus (that is, are sent without being carried in the first frame), for example, a bias of the neuron.

Optionally, the first frame may further include sixth indication information, where the sixth indication information may indicate a hidden layer structure of the neural network. Alternatively, the method shown in FIG. 13 further includes: The second communication apparatus sends the sixth indication information, to indicate the hidden layer structure of the neural network. For the hidden layer structure of the neural network and a specific indication manner of the sixth indication information, refer to the related descriptions in Embodiment 2. Details are not described herein again. Alternatively, the first frame includes a part of the hidden layer structure of the neural network, and the other part of the hidden layer structure is separately sent by the second communication apparatus (that is, is sent without being carried in the first frame).

It may be understood that when this embodiment of this application is combined with Embodiment 2, the function request information in Embodiment 2 may be carried in a newly defined information element, and indication information (one or more of the first indication information, the second indication information, the information A, or the information B) in this embodiment of this application may also be carried in a newly defined information element. Therefore, the element identifiers (element IDs) of the two information elements (FIG. 11 and FIG. 14) may share one identification system, in other words, element IDs of the two information elements cannot be the same. Certainly, the element IDs of the two information elements may alternatively use different identification systems, in other words, the element IDs of the two information elements are allowed to be the same. When the element IDs of the two information elements are the same, functions of the two information elements may be distinguished by using a transmitter. For example, if the transmitter is the first communication apparatus, it indicates that the information element carries the function request information; or if the transmitter is the second communication apparatus, it indicates that the information element carries the indication information mentioned in the embodiments of this application.

The control identifier (control ID) in the A-control subfield is similar to the element ID. To be specific, the control ID shown in FIG. 15 in this embodiment of this application and the control ID shown in FIG. 12 in Embodiment 2 may share one identification system, or may use different identification systems.

It may be further understood that when this embodiment of this application is combined with Embodiment 2, the function response information in Embodiment 2 and the indication information (one or more of the first indication information, the second indication information, the information A, or the information B) in this embodiment of this application may be carried in a same frame, or certainly, may be in different frames. If they (the function response information and the indication information in this embodiment of this application) are carried in a same frame, the function response information and the indication information may be specifically carried in a same information element or an A-control subfield, or may be carried in different information elements or A-control subfields. Alternatively, one of the function response information and the indication information may be carried in an information element, and the other may be carried in an A-control subfield. For example, the function response information is carried in the information element, and the indication information in this embodiment of this application is carried in the A-control subfield. This is not limited in embodiments of this application.

S303: The first communication apparatus determines at least one of the input information of the neural network and an input layer structure of the neural network based on an indication of the first indication information in the first frame.

Optionally, the input layer structure of the neural network includes a number of neurons at the input layer. The number of neurons at the input layer may be determined based on a number of neurons corresponding to each type of input information, the number of pieces of/length of the input information of the neural network, and a maximum number of channels allowed for channel aggregation by the first communication apparatus. It is assumed that there are K types of input information of the neural network (or there are K types of input information indicated by the first indication information), and the maximum number of channels allowed for channel aggregation by the first communication apparatus is M. In this case, a mathematical expression of the number of neurons at the input layer is:

$$R = (\sum\nolimits_{k=1}^{K} x_k \times b_k) \times M \quad (2\text{-}1),$$

where

R represents the number of neurons at the input layer, $x_k$ represents a number of neurons corresponding to a $k^{th}$ type of input information, and $b_k$ represents a number of pieces of/length of the $k^{th}$ type of input information.

For example, it is assumed that the maximum number of channels allowed for channel aggregation by the first communication apparatus is M, the number of pieces of/length of the basic observation information of the neural network is T, and the number of pieces of/length of the extended observation information of the neural network is 1. In other words, the input of the neural network includes T pieces of historical basic observation information and one piece of historical extended observation information of M channels. It is further assumed that there are five types of input information indicated by the first indication information, which are respectively represented by o, a, I, $load_0$, and $load_1$, and the number of neurons corresponding to each type of input information is 1, where o represents carrier sense results of the M channels, a represents channel aggregation statuses of the M channels, I represents duration of (o, a) pairs (that is, time in which o and a remain unchanged), $load_0$ represents load of the node (to be specific, load of the first communication apparatus) on the M channels, and $load_1$ represents load of another node on the M channels (to be specific, load information of the another communication apparatus on the channels). In this case, the number of neurons at the input layer of the neural network is (3*T+2*1)*M.

The number of neurons corresponding to each type of input information may be preset, or may be indicated in the first frame. For an indication manner, refer to the foregoing descriptions. The number of pieces of/length of the input information of the neural network may be preset, or may be indicated in the first frame. For an indication manner, refer to the foregoing descriptions. The maximum number of channels allowed for channel aggregation by the first communication apparatus may be determined based on a maximum channel bandwidth. For a specific determining manner, refer to the related descriptions in Embodiment 2. Therefore, after receiving the first frame, the first communication apparatus may determine at least one of the input information of the neural network and the input layer structure of the neural network based on the indication of the first indication information in the first frame.

In this embodiment of this application, a new information element or A-control subfield is defined to exchange information related to the input of the neural network. This provides a basis for the first communication apparatus to implement AI-assisted channel aggregation, AI-assisted channel aggregation joint channel access, or AI-assisted channel access.

## Embodiment 4

Embodiment 4 of this application mainly describes a frame format indicated by output information (including but not limited to an output layer structure of a neural network, a manner of selecting a decision result of the neural network, or the like), that is, how a first communication apparatus and a second communication apparatus reach an agreement on the output information of the neural network.

Optionally, Embodiment 4 of this application may be implemented in combination with one or more of Embodiment 1 to Embodiment 3, or may be implemented separately. This is not limited in this application.

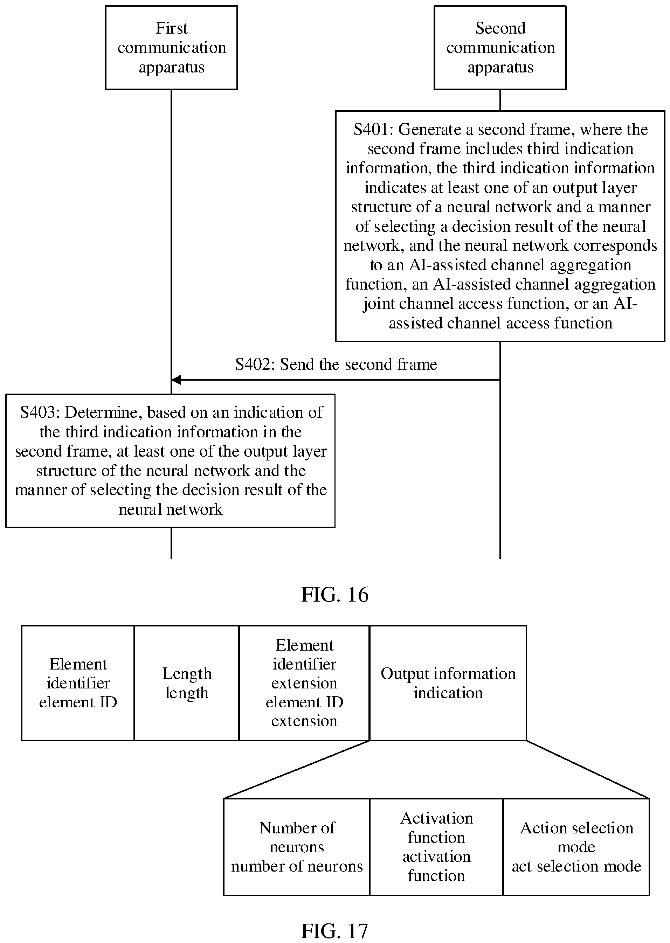

FIG. 16 is still another schematic flowchart of an information exchange method according to an embodiment of this application. As shown in FIG. 16, the information exchange method includes but is not limited to the following steps.

S401: A second communication apparatus generates a second frame, where the second frame includes third indication information, the third indication information indicates at least one of an output layer structure of a neural network and a manner of selecting a decision result of the neural network, and the neural network corresponds to an AI-assisted channel aggregation function, an AI-assisted channel aggregation joint channel access function, or an AI-assisted channel access function.

S402: The second communication apparatus sends the second frame.

Correspondingly, a first communication apparatus receives the second frame. Optionally, after receiving the second frame, the first communication apparatus replies with acknowledgment information such as an ACK or a BA to the second communication apparatus, to acknowledge that the second frame has been received.

S403: The first communication apparatus determines, based on an indication of the third indication information in the second frame, at least one of the output layer structure of the neural network and the manner of selecting the decision result of the neural network.

The neural network in this embodiment of this application corresponds to the AI-assisted channel aggregation function, the AI-assisted channel aggregation joint channel access function, or the AI-assisted channel access function. For details, refer to the related descriptions in Embodiment 1. Details are not described herein again.

Optionally, the output layer structure of the neural network may include one or more of the following: a number of neurons at an output layer, or an activation function used by a neuron at the output layer.

The number of neurons at the output layer may be determined based on one or more of the function, an aggregation capability of the first communication apparatus (whether preamble puncturing is supported), or a maximum number of channels allowed for channel aggregation by the first communication apparatus. For example, (1) If the AI-assisted channel aggregation function is requested, the number of neurons at the output layer may be obtained based on the aggregation capability and the maximum number of channels allowed for channel aggregation. For example, it is assumed that the maximum number of channels allowed for channel aggregation by the first communication apparatus is 8, in other words, an allowed maximum bandwidth is 160 MHz, and the first communication apparatus supports preamble puncturing. In this case, it may be determined, according to an existing standard (for example, the 802.11be standard), that there are n1 punctured channel aggregation (that is, aggregation of non-adjacent channels) modes, and there are n2 non-punctured channel aggregation (that is, aggregation of adjacent channels) modes. Therefore, the number of neurons at the output layer is n1+n2. (2) If the AI-assisted channel access function is requested, the number of neurons at the output layer is 2. (3) If the AI-assisted channel aggregation joint channel access function is requested, the number of neurons at the output layer is a total aggregation mode obtained based on the aggregation capability and the maximum number of channels allowed for channel aggregation plus 1.

Optionally, the manner of selecting the decision result of the neural network may be understood as a manner of selecting the decision result from an output result of the neural network. For example, the manner of selecting the decision result of the neural network is selecting a result corresponding to a maximum value of the output layer of the neural network, or randomly selecting a result based on a probability. For example, it is assumed that the neural network corresponds to the AI-assisted channel aggregation function, and it is assumed that the number of neurons at the output layer of the neural network is 4, each neuron corresponds to one channel aggregation mode, and the activation function at the output layer is a normalized exponential function (Softmax). In this case, an overall output of the neural network is probability distribution, in other words, an output value $p\_i$ of each neuron i meets $p\_1+p\_2+p\_3+p\_4=1$. Therefore, two manners of selecting the decision result are respectively selecting a channel aggregation mode corresponding to a maximum $p\_i$ value, or randomly selecting a channel aggregation mode based on distribution of $p\_1$, $p\_2$, $p\_3$ and $p\_4$.

Optionally, the third indication information may be carried in a newly defined information element of the second frame, or may be carried in an A-control subfield of the second frame. The second frame may be a newly defined frame, or may be a frame that reuses a previous standard. This is not limited in embodiments of this application. If the second frame is a frame that reuses a previous standard, the second frame may further include indication information for distinguishing whether the second frame maintains an original function or implements an extended function (that is, a function in this embodiment of this application). In addition, if the second frame is a frame that reuses a previous standard, the third indication information may be further carried in a reserved field of the second frame (if the second frame has the reserved field).

In an example, FIG. 17 is a diagram of still another frame format of an information element according to an embodiment of this application. As shown in FIG. 17, the information element includes but is not limited to an element identifier (element ID) field, a length (length) field, an element identifier extension (element ID extension) field, and an output information indication field (that is, the foregoing third indication information). The output information indication field includes but is not limited to one or more of the following fields: a number of neurons (number of neurons) field, an activation function (activation function) field, and an action selection mode (act selection mode) field.

The number of neurons field indicates the number of neurons at the output layer, and the activation function field indicates the activation function used by the neuron at the output layer. The activation function herein includes but is not limited to a linear (Linear) function, a rectified linear unit (rectified linear unit, ReLU), a normalized exponential function (Softmax), or the like. For a specific function expression, refer to the conventional technology. It may be understood that, not using the activation function is equivalent to using a linear activation function. Therefore, when the activation function field indicates that the activation function used by the neuron at the output layer is a linear function, it may be understood that the neuron at the output layer does not use the activation function.

The act selection mode field indicates the manner of selecting the decision result of the neural network.

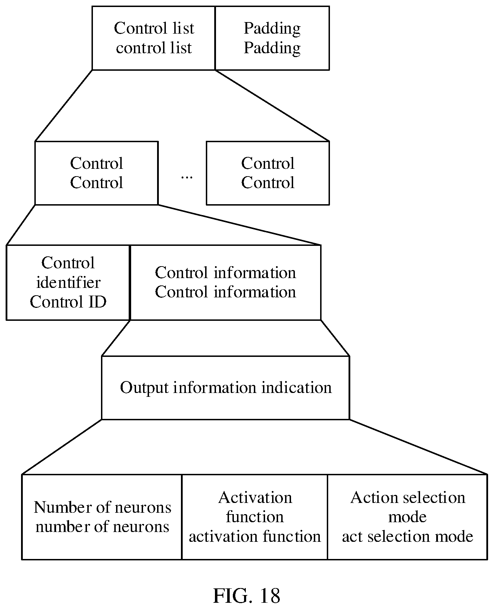

In another example, FIG. 18 is a diagram of still another frame format of an A-control subfield according to an embodiment of this application. As shown in FIG. 18, the A-control subfield includes but is not limited to an output information indication field (that is, the foregoing third indication information). For implementation of the output information indication field, refer to FIG. 17. Details are not described herein again.

It should be understood that names of the fields or subfields included in FIG. 17 and FIG. 18 are merely examples, and the fields or subfields may have other names. This is not limited in embodiments of this application. It should be further understood that arrangement sequences of the fields in FIG. 17 and FIG. 18 are merely examples. This is not limited in embodiments of this application.

Optionally, the second frame may further include a parameter of the neural network. Alternatively, the method shown in FIG. 16 further includes: The second communication apparatus sends the parameter of the neural network. The parameter of the neural network includes at least one of a bias and a weight of a neuron. Alternatively, the second frame includes some parameters of the neural network, for example, a weight of a neuron. The other parameters are separately sent by the second communication apparatus (that is, are sent without being carried in the second frame), for example, a bias of the neuron.

Optionally, the second frame may further include sixth indication information, where the sixth indication information may indicate a hidden layer structure of the neural network. Alternatively, the method shown in FIG. 16 further includes: The second communication apparatus sends the sixth indication information, to indicate the hidden layer structure of the neural network. For the hidden layer structure of the neural network and a specific indication manner of the sixth indication information, refer to the related descriptions in Embodiment 2. Details are not described herein again. Alternatively, the second frame includes a part of the hidden layer structure of the neural network, and the other part of the hidden layer structure is separately sent by the second communication apparatus (that is, is sent without being carried in the second frame).

It may be understood that when this embodiment of this application is combined with Embodiment 3, the element ID in FIG. 14 and the element ID in FIG. 17 may share one identification system, in other words, the element IDs of the two information elements cannot be the same. When this embodiment of this application is combined with Embodiment 2, the element ID in FIG. 11 and the element ID in FIG. 17 may share one identification system, or may use different identification systems (in other words, the two element IDs are allowed to be the same). When the element ID in FIG. 11 is the same as the element ID in FIG. 17, functions of the two information elements may be distinguished by using a transmitter.

The control identifier (control ID) in the A-control subfield is similar to the element ID. To be specific, the control ID in FIG. 15 and the element ID in FIG. 18 may share one identification system. The control ID in FIG. 12 and the control ID in FIG. 18 may share one identification system, or may use different identification systems.

It may be further understood that when this embodiment of this application is combined with Embodiment 3, the first frame in Embodiment 3 and the second frame in this embodiment of this application may be a same frame. In other words, information (for example, one or more of the first indication information, the second indication information, the information A, or the information B) related to the input of the neural network in Embodiment 3 and output information (that is, the foregoing third indication information) in this embodiment of this application may be carried in one frame for exchange. Further, the information related to the input of the neural network in Embodiment 3 and the output information in this embodiment of this application may be carried in a same information element or A-control subfield of a frame, or may be carried in different information elements or A-control subfields of a frame. Alternatively, one of the information related to the input of the neural network in Embodiment 3 and the output information in this embodiment of this application may be carried in an information element, and the other may be carried in an A-control subfield. For example, the information related to the input of the neural network is carried in an information element of a frame, and the output information is carried in an A-control subfield of the frame. This is not limited in embodiments of this application.

Certainly, the first frame and the second frame may alternatively be different frames.

Similarly, the output information (that is, the foregoing third indication information) in this embodiment of this application and the function response information in Embodiment 2 may also be carried in a same frame, or certainly may be carried in different frames. Specifically, they (the output information and the function response information) may be carried in a same information element or A-control subfield, or may be carried in different information elements or A-control subfields. Alternatively, one of the output information and the function response information may be carried in an information element and the other may be carried in an A-control subfield.

In this embodiment of this application, a new information element or A-control subfield is defined to exchange the output information of the neural network (for example, the output layer structure of the neural network or the manner of selecting the decision result selection of the neural network). This provides a basis for the first communication apparatus to implement AI-assisted channel aggregation, AI-assisted channel aggregation joint channel access, or AI-assisted channel access.

**Embodiment 5**

Embodiment 5 of this application mainly describes an example in which Embodiment 1 to Embodiment 4 are implemented together, that is, an exchange procedure in which a first communication apparatus and a second communication apparatus reach an agreement on a function, a structure, a parameter, an input, an output, and the like of a neural network.

In this embodiment of this application, an example in which the first communication apparatus is a STA and the second communication apparatus is an AP is used for description.

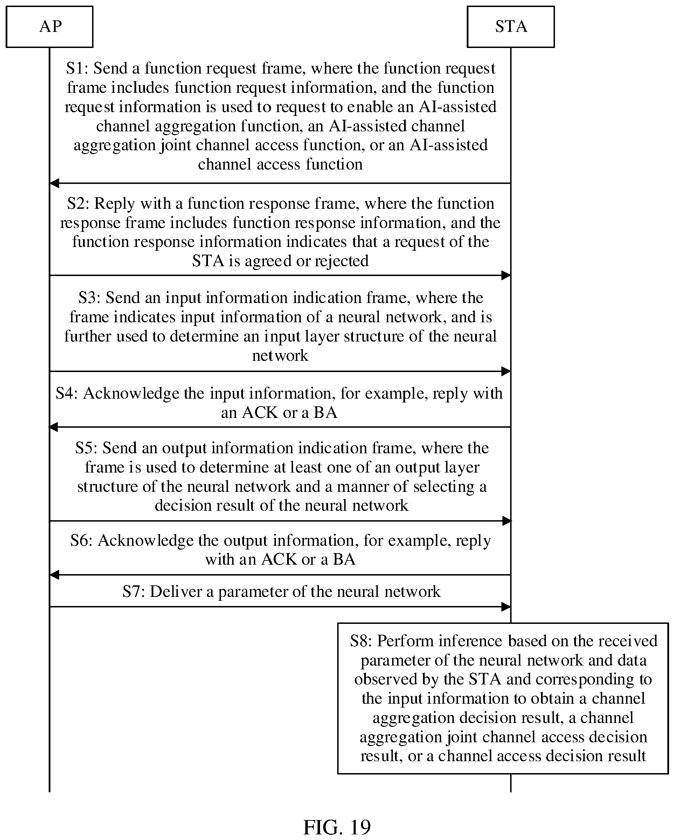

FIG. 19 is yet another schematic flowchart of an information exchange method according to an embodiment of this application. As shown in FIG. 19, the information exchange method includes the following steps.

S1: A STA sends a function request frame to an AP, where the function request frame includes function request information, and the function request information is used to request to enable an AI-assisted channel aggregation function, an AI-assisted channel aggregation joint channel access function, or an AI-assisted channel access function.

Optionally, an aggregation capability (that is, whether channel aggregation is allowed between non-adjacent 20 MHz channels) and a maximum number of channels allowed for channel aggregation may be further reported in the function request frame.

Optionally, one or more of different function requests and the maximum number of channels allowed for channel aggregation cause different numbers of neurons at an output layer of a neural network.

Optionally, a trigger condition of a function request may be that a packet loss rate is greater than a preset threshold.

Optionally, a difference between AI-assisted channel aggregation and AI-assisted channel aggregation joint channel access lies in that the former uses a conventional channel access method of CSMA/CA (Wi-Fi standard), and AI is used to determine whether to perform channel aggregation, which channels are aggregated together, or the like; and the latter uses AI to determine whether to access a channel, and whether to perform channel aggregation, which channels are aggregated together, or the like. In addition, AI-assisted channel access may be understood as a special case of AI-assisted channel aggregation joint channel access, in other words, the maximum number of channels allowed for channel aggregation is 1.

S2: The AP replies with a function response frame, where the function response frame includes function response information, and the function response information indicates that a request of the STA is agreed or rejected.

In this embodiment of this application, the function response information indicates that the request of the STA is agreed, in other words, the AP agrees with the request of the STA.

For implementations of step S1 and step S2, refer to the descriptions in Embodiment 2. Details are not described herein again.

S3: The AP sends an input information indication frame to the STA, where the frame indicates input information of the neural network, and is further used to determine an input layer structure of the neural network.

S4: The STA confirms the input information. For example, the STA replies with an ACK or a BA.

The input information indication frame herein is the first frame in Embodiment 3. For implementations of step S3 and step S4, refer to the descriptions in Embodiment 3. Details are not described herein again.

S5: The AP sends an output information indication frame to the STA, where the frame is used to determine at least one of an output layer structure of the neural network and a manner of selecting a decision result of the neural network.

S6: The STA confirms output information. For example, the STA replies with an ACK or a BA.

The output information indication frame herein is the second frame in Embodiment 4. For implementations of step S5 and step S6, refer to the descriptions in Embodiment 4. Details are not described herein again.

S7: The AP delivers a parameter of the neural network. Optionally, after the AP and the STA reach an agreement on a function, a structure, an input, and an output of the neural network, the AP delivers the parameter of the trained neural network to the STA.

S8: The STA makes an inference based on the received parameter of the neural network and data observed by the STA and corresponding to the input information to obtain a channel aggregation decision result, a channel aggregation joint channel access decision result, or a channel access decision result.

For an implementation of step S8, refer to the descriptions of step S 103 in Embodiment 1. Details are not described herein again.

The STA in this embodiment of this application requests the AP to enable an AI-assisted related function. After agreeing with the request of the STA, the AP sends, to the STA, related information (the input, the output, the structure, the parameter, and the like) that is of the neural network and that is used to implement or support the function requested by the STA, so that the STA can perform AI-assisted related function by using the neural network trained by the AP, to improve performance.

The foregoing content describes in detail the methods provided in this application. To facilitate implementation of the foregoing solutions in embodiments of this application, embodiments of this application further provide corresponding apparatuses or devices.

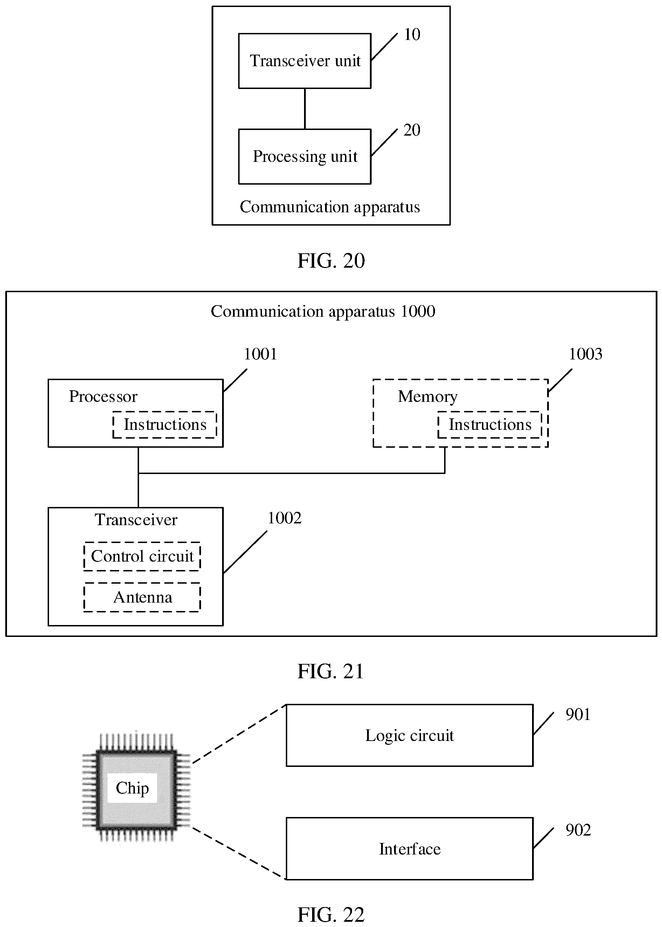

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, division into modules is an example, and is merely logical function division. In actual implementation, another division manner may be used. The following describes in detail communication apparatuses in embodiments of this application with reference to FIG. 20 to FIG. 22.

FIG. 20 is a diagram of a structure of a communication apparatus according to an embodiment of this application. As shown in FIG. 20, the communication apparatus includes a transceiver unit 10 and a processing unit 20.

In a design, the transceiver unit 10 is configured to: send function request information and receive function response information.

For example, the processing unit 20 is configured to: generate the function request information; and send the function request information through the transceiver unit 10 or control the transceiver unit 10 to send the function request information.

In a possible implementation, when the function response information indicates that a request of the function request information is agreed, the transceiver unit 10 is further configured to receive at least one of a first frame, a second frame, or a parameter of a neural network.

For example, the processing unit 20 is further configured to perform AI-assisted channel aggregation, AI-assisted channel aggregation joint channel access, or AI-assisted channel access based on at least one of the first frame, the second frame, or the parameter of the neural network.

It may be understood that for specific descriptions of the function request information, the function response information, the first frame, the second frame, the parameter of the neural network, and the like, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments (for example, FIG. 10 and FIG. 19). Details are not described herein again.

In another design, the transceiver unit 10 is configured to receive a first frame; and the processing unit 20 is configured to determine at least one of input information of a neural network and an input layer structure of the neural network based on an indication of first indication information in the first frame.

In a possible implementation, the transceiver unit 10 is further configured to receive at least one of a parameter of the neural network or a second frame.

For example, the processing unit 20 is further configured to perform AI-assisted rate adaptation, AI-assisted rate adaptation joint channel access, or the like based on at least one of the first frame, the second frame, or the parameter of the neural network.

It may be understood that for specific descriptions of the first frame, the second frame, the parameter of the neural network, and the like, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments (for example, FIG. 13). Details are not described herein again.

In still another design, the transceiver unit 10 is configured to receive a second frame; and the processing unit 20 is configured to determine, based on an indication of fourth indication information in the second frame, at least one of an output layer structure of a neural network and a manner of selecting a decision result of the neural network.

In a possible implementation, the transceiver unit 10 is further configured to receive a parameter of the neural network.

It may be understood that for specific descriptions of the second frame, the parameter of the neural network, and the like, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments (for example, FIG. 16). Details are not described herein again.

In yet another design, the processing unit 20 is configured to obtain input information of a neural network. The processing unit 20 is further configured to: obtain a structure of the neural network; receive a parameter of the neural network through the transceiver unit 10 or control the transceiver unit 10 to receive a parameter of the neural network; and determine the neural network based on the structure and the parameter of the neural network. The processing unit 20 is further configured to: obtain T monitored datasets, and input the T datasets into the neural network for processing to obtain a channel aggregation decision result, a channel aggregation joint channel access decision result, or a channel access decision result.

It may be understood that for specific descriptions of the input information, the structure, the parameter, and the like of the neural network, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments (for example, FIG. 7). Details are not described herein again.

FIG. 20 is reused. In some other embodiments of this application, the communication apparatus may be the second communication apparatus shown above. To be specific, the communication apparatus shown in FIG. 20 may be configured to perform the steps, functions, or the like performed by the second communication apparatus in the foregoing method embodiments. For example, the second communication apparatus may be an access point device, a chip, or the like. This is not limited in embodiments of this application.

In a design, the transceiver unit 10 is configured to: receive function request information and send function response information.

For example, the processing unit 20 is configured to: generate the obtaining response information; and send the function response information through the transceiver unit 10 or control the transceiver unit 10 to send the function response information.

In a possible implementation, the transceiver unit 10 is further configured to send at least one of a first frame, a second frame, or a parameter of a neural network.

For example, the processing unit 20 is further configured to: obtain at least one of the first frame, the second frame, or the parameter of the neural network; and send at least one of the first frame, the second frame, or the parameter of the neural network through the transceiver unit 10 or the control the transceiver unit 10 to send at least one of the first frame, the second frame, or the parameter of the neural network.

It may be understood that for specific descriptions of the function request information, the function response information, the first frame, the second frame, the parameter of the neural network, and the like, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments (for example, FIG. 10 and FIG. 19). Details are not described herein again.

In another design, the processing unit 20 is configured to: generate a first frame; and send the first frame through the transceiver unit 10 or control the transceiver unit 10 to send the first frame.

In a possible implementation, the transceiver unit 10 is further configured to send at least one of a second frame or a parameter of a neural network.

For example, the processing unit 20 is further configured to: obtain at least one of the second frame or the parameter of the neural network; and send at least one of the second frame or the parameter of the neural network through the transceiver unit 10 or the control the transceiver unit 10 to send at least one of the second frame or the parameter of the neural network.

It may be understood that for specific descriptions of the first frame, the second frame, the parameter of the neural network, and the like, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments (for example, FIG. 13). Details are not described herein again.

In still another design, the processing unit 20 is configured to: generate a second frame; and send the second frame through the transceiver unit 10 or control the transceiver unit 10 to send the second frame.

In a possible implementation, the transceiver unit 10 is further configured to send a parameter of a neural network.

For example, the processing unit 20 is further configured to: obtain the parameter of the neural network; and send the parameter of the neural network through the transceiver unit 10 or the control the transceiver unit 10 to send the parameter of the neural network.

It may be understood that for specific descriptions of the second frame, the parameter of the neural network, and the like, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments (for example, FIG. 16). Details are not described herein again.

The foregoing describes the first communication apparatus and the second communication apparatus in embodiments of this application. The following describes possible product forms of the first communication apparatus and the second communication apparatus. It should be understood that any form of product having a function of the first communication apparatus in FIG. 20 or any form of product having a function of the second communication apparatus in FIG. 20 falls within the protection scope of embodiments of this application. It should be further understood that the following description is merely an example, and the product forms of the first communication apparatus and the second communication apparatus in embodiments of this application are not limited thereto.

In the communication apparatus shown in FIG. 20, the processing unit 20 may be one or more processors, and the transceiver unit 10 may be a transceiver. Alternatively, the transceiver unit 10 may be a sending unit and a receiving unit, the sending unit may be a transmitter, and the receiving unit may be a receiver. The sending unit and the receiving unit are integrated into one device, for example, a transceiver. In this embodiment of this application, the processor and the transceiver may be coupled, or the like. A manner of connecting the processor and the transceiver is not limited in embodiments of this application.

FIG. 21 is a diagram of a structure of a communication apparatus 1000 according to an embodiment of this application. The communication apparatus 1000 may be a first communication apparatus or a second communication apparatus, or a chip in the first communication apparatus or the second communication apparatus. FIG. 21 shows only main components in the communication apparatus 1000. In addition to a processor 1001 and a transceiver 1002, the communication apparatus may further include a memory 1003 and an input/output apparatus (which is not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

In a design, the communication apparatus 1000 may be configured to perform a function of the first communication apparatus in Embodiment 1. The processor 1001 may be configured to perform step S101, step S102, and step S103 in FIG. 7, and/or configured to perform another process of the technology described in this specification. The transceiver 1002 may be configured to receive and send information, data, or the like required in FIG. 7, and/or configured to perform another process of the technology described in this specification.

In a design, the communication apparatus 1000 may be configured to perform a function of the first communication apparatus in Embodiment 2. The processor 1001 may be configured to generate the function request information sent in step S201 in FIG. 10, and/or configured to perform another process of the technology described in this specification. The transceiver 1002 may be configured to perform step S201 in FIG. 10, and/or configured to perform another process of the technology described in this specification.

In another design, the communication apparatus 1000 may be configured to perform a function of the second communication apparatus in Embodiment 2. The processor 1001 may be configured to generate the function response information sent in step S202 in FIG. 10, and/or configured to perform another process of the technology described in this specification. The transceiver 1002 may be configured to perform step S202 and step S203 in FIG. 10, and/or configured to perform another process of the technology described in this specification.

In a design, the communication apparatus 1000 may be configured to perform a function of the first communication apparatus in Embodiment 3. The processor 1001 may be configured to perform step S303 in FIG. 13, and/or configured to perform another process of the technology described in this specification. The transceiver 1002 may be configured to receive the first frame in FIG. 13, and/or configured to perform another process of the technology described in this specification.

In another design, the communication apparatus 1000 may be configured to perform a function of the second communication apparatus in Embodiment 3. The processor 1001 may be configured to perform step S301 in FIG. 13, and/or configured to perform another process of the technology described in this specification. The transceiver 1002 may be configured to perform step S302 in FIG. 13, and/or configured to perform another process of the technology described in this specification.

In a design, the communication apparatus 1000 may be configured to perform a function of the first communication apparatus in Embodiment 4. The processor 1001 may be configured to perform step S403 in FIG. 16, and/or configured to perform another process of the technology described in this specification. The transceiver 1002 may be configured to receive the second frame in FIG. 16, and/or configured to perform another process of the technology described in this specification.

In another design, the communication apparatus 1000 may be configured to perform a function of the second communication apparatus in Embodiment 4. The processor 1001 may be configured to perform step S401 in FIG. 16, and/or configured to perform another process of the technology described in this specification. The transceiver 1002 may be configured to perform step S402 in FIG. 16, and/or configured to perform another process of the technology described in this specification.

In a design, the communication apparatus 1000 may be configured to perform a function of the STA in Embodiment 5. The processor 1001 may be configured to perform step S8 in FIG. 19, and/or configured to perform another process of the technology described in this specification. The transceiver 1002 may be configured to perform steps S1, S4, and S6 in FIG. 19, and/or configured to perform another process of the technology described in this specification.

In another design, the communication apparatus 1000 may be configured to perform a function of the AP in Embodiment 5. The processor 1001 may be configured to: generate the function response frame sent in step S2, the input information indication frame sent in step S3, and the output information indication frame sent in step S5 in FIG. 19, and obtain the parameter of the neural network sent in step S7, and/or configured to perform another process of the technology described in this specification. The transceiver 1002 may be configured to perform steps S2, S3, S5, and S7 in FIG. 19, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in the foregoing method embodiments. The computer program may be fixed in the processor 1001. In this case, the processor 1001 may be implemented by hardware.

In an implementation, the communication apparatus 1000 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (n-Metal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by that in FIG. 21. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In another possible implementation, in the communication apparatus shown in FIG. 20, the processing unit 20 may be one or more logic circuits. The transceiver unit 10 may be an input/output interface that is also referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 22 is a diagram of another structure of a communication apparatus according to an embodiment of this application. As shown in FIG. 22, the communication apparatus shown in FIG. 22 includes a logic circuit 901 and an interface 902. That is, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 19 shows an example in which the communication apparatus is a chip. The chip includes the logic circuit 901 and the interface 902.

In this embodiment of this application, the logic circuit and the interface may be coupled to each other. A specific manner of a connection between the logic circuit and the interface is not limited in embodiments of this application.

For example, when the communication apparatus is configured to perform the method, the function, or the step performed by the first communication apparatus in Embodiment 1, the logic circuit 901 is configured to: obtain input information of a neural network, and obtain a structure of the neural network; and the interface 902 is configured to input a parameter of the neural network. The logic circuit 901 is further configured to determine the neural network based on the structure and the parameter of the neural network. The logic circuit 901 is further configured to: obtain T monitored datasets, and input the T datasets into the neural network for processing to obtain a channel aggregation decision result, a channel aggregation joint channel access decision result, or a channel access decision result.

For example, when the communication apparatus is configured to perform the method, the function, or the step performed by the first communication apparatus in Embodiment 2, the logic circuit 901 is configured to obtain function request information; and the interface 902 is configured to output the function request information and input function response information.

For example, when the communication apparatus is configured to perform the method, the function, or the step performed by the second communication apparatus in Embodiment 2, the interface 902 is configured to input function request information; the logic circuit 901 is configured to obtain function response information; and the interface 902 is configured to output the function response information.

For example, when the communication apparatus is configured to perform the method, the function, or the step performed by the first communication apparatus in Embodiment 3, the interface 902 is configured to input a first frame; and the logic circuit 901 is configured to determine, based on an indication of first indication information in the first frame, at least one of input information of a neural network and an input layer structure of the neural network.

For example, when the communication apparatus is configured to perform the method, the function, or the step performed by the second communication apparatus in Embodiment 3, the logic circuit 901 is configured to generate a first frame; and the interface 902 is configured to output the first frame.

For example, when the communication apparatus is configured to perform the method, the function, or the step performed by the first communication apparatus in Embodiment 4, the interface 902 is configured to input a second frame; and the logic circuit 901 is configured to determine, based on an indication of third indication information in the second frame, at least one of an output layer structure of a neural network and a manner of selecting a decision result of the neural network.

For example, when the communication apparatus is configured to perform the method, the function, or the step performed by the second communication apparatus in Embodiment 4, the logic circuit 901 is configured to generate a second frame; and the interface 902 is configured to output the second frame.

For example, when the communication apparatus is configured to perform the method, the function, or the step performed by the STA in Embodiment 5, the logic circuit 901 is configured to generate a function request frame; and the interface 902 is configured to output the function request frame. The interface 902 is further configured to: input an output information indication frame, an input information indication frame, and a parameter of a neural network. The logic circuit 901 is configured to perform inference based on the received parameter of the neural network and data observed by the logic circuit 901 and corresponding to the input information to obtain a channel aggregation decision result, a channel aggregation joint channel access decision result, or a channel access decision result.

For example, when the communication apparatus is configured to perform the method, the function, or the step performed by the AP in Embodiment 5, the logic circuit 901 is configured to generate a function response frame; and the interface 902 is configured to output the function response frame. The interface 902 is further configured to output an input information indication frame, an output information indication frame, and a parameter of a neural network.

It may be understood that the communication apparatus shown in embodiments of this application may implement the method provided in embodiments of this application in a form of hardware, or may implement the method provided in embodiments of this application in a form of software. This is not limited in embodiments of this application.

It may be understood that for specific descriptions of the function request information or the function request frame, the function response information or the function response frame, the first frame, the second frame, the parameter of the neural network, and the like, refer to the method embodiments shown above. Details are not described herein again.

For specific implementations of embodiments shown in FIG. 22, refer to Embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of Embodiments.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are performed.

This application further provides a computer program product. The computer program product includes computer code or a computer program. When the computer code or the computer program is run on a computer, operations and/or processing performed by the second communication apparatus in the method provided in this application are performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information exchange method, comprising:

   sending, by a first communication apparatus, function request information, wherein the function request information is used to request to enable an artificial intelligence AI-assisted channel aggregation function, an AI-assisted channel aggregation joint channel access function, or an AI-assisted channel access function; and receiving, by the first communication apparatus, function response information, wherein the function response information is used to respond to a request of the function request information.

2. An information exchange method, comprising:

   receiving, by a second communication apparatus, function request information, wherein the function request information is used to request to enable an artificial intelligence AI-assisted channel aggregation function, an AI-assisted channel aggregation joint channel access function, or an AI-assisted channel access function; and sending, by the second communication apparatus, function response information, wherein the function response information is used to respond to a request of the function request information.

3. The method according to claim 1, wherein the function response information indicates that the request of the function request information is agreed; and
   after the receiving, by the first communication apparatus, function response information, the method further comprises:
   receiving, by the first communication apparatus, a first frame, wherein the first frame comprises first indication information, the first indication information indicates input information of a neural network, and the neural network corresponds to the function that is requested to be enabled by the function request information.

4. The method according to claim 2, wherein the function response information indicates that the request of the function request information is agreed; and
   after the sending, by the second communication apparatus, function response information, the method further comprises:
   sending, by the second communication apparatus, a first frame, wherein the first frame comprises first indication information, the first indication information indicates input information of a neural network, and the neural network corresponds to the function that is requested to be enabled by the function request information.

5. The method according to claim 3 or 4, wherein the input information of the neural network comprises one or more of the following: a carrier sense result, a channel aggregation status, channel access behavior, a data packet transmission result, duration of the carrier sense result, duration of channel aggregation, or duration of the channel access behavior, wherein
   the channel access behavior comprises access or non-access.

6. The method according to claim 5, wherein the input information of the neural network further comprises one or more of the following: a packet loss rate, duration from a current moment to a moment of last successful transmission of the first communication apparatus, duration from the current moment to a moment of last successful transmission of another communication apparatus on a channel, load information of the first communication apparatus, or load information of the another communication apparatus on the channel, wherein the another communication apparatus is a communication apparatus other than the first communication apparatus.

7. The method according to any one of claims 3 to 6, wherein the first frame further comprises second indication information, and the second indication information indicates a number of pieces of input information of the neural network.

8. The method according to any one of claims 3 to 7, wherein the first frame further comprises information indicating a dimension of the input information.

9. The method according to claim 1 or 3, wherein the function response information indicates that the request of the function request information is agreed; and
   after the receiving, by the first communication apparatus, function response information, the method further comprises:

receiving, by the first communication apparatus, a second frame, wherein the second frame comprises third indication information, the third indication information indicates at least one of an output layer structure of the neural network and a manner of selecting a decision result of the neural network, and the neural network corresponds to the function that is requested to be enabled by the function request information.

10. The method according to claim 2 or 4, wherein the function response information indicates that the request of the function request information is agreed; and
after the sending, by the second communication apparatus, function response information, the method further comprises:
sending, by the second communication apparatus, a second frame, wherein the second frame comprises third indication information, the third indication information indicates at least one of an output layer structure of the neural network and a manner of selecting a decision result of the neural network, and the neural network corresponds to the function that is requested to be enabled by the function request information.

11. The method according to claim 9 or 10, wherein the output layer structure of the neural network comprises one or more of the following: a number of neurons, or an activation function used by a neuron.

12. The method according to any one of claims 1, 3, and 9, wherein the function response information indicates that the request of the function request information is agreed; and
after the receiving, by the first communication apparatus, function response information, the method further comprises:
receiving, by the first communication apparatus, a parameter of the neural network, wherein the parameter of the neural network comprises at least one of a bias and a weight of a neuron, and the neural network corresponds to the function that is requested to be enabled by the function request information.

13. The method according to any one of claims 2, 4, and 10, wherein the function response information indicates that the request of the function request information is agreed; and
after the sending, by the second communication apparatus, function response information, the method further comprises:
sending, by the second communication apparatus, a parameter of the neural network, wherein the parameter of the neural network comprises at least one of a bias and a weight of a neuron, and the neural network corresponds to the function that is requested to be enabled by the function request information.

14. The method according to any one of claims 1 to 13, wherein the function response information indicates that the request of the function request information is agreed; and
the function response information further comprises the parameter of the neural network, the parameter of the neural network comprises at least one of the bias and the weight of the neuron, and the neural network corresponds to the function that is requested to be enabled by the function request information.

15. The method according to any one of claims 1 to 14, wherein the function request information is carried in an information element, or the function request information is carried in an aggregated control subfield of a high throughput HT control field.

16. The method according to any one of claims 1 to 15, wherein the function request information further comprises fourth indication information, and the fourth indication information indicates a maximum number of channels allowed for channel aggregation by the first communication apparatus.

17. The method according to any one of claims 1 to 16, wherein the function request information further comprises fifth indication information, and the fifth indication information indicates whether the first communication apparatus supports preamble puncturing.

18. The method according to any one of claims 1 to 17, wherein the function response information indicates that the request of the function request information is agreed; and
the function response information further comprises sixth indication information, the sixth indication information indicates a hidden layer structure of the neural network, and the neural network corresponds to the function that is requested to be enabled by the function request information.

19. A communication apparatus, comprising a processing unit and a transceiver unit, wherein the processing unit is configured to control the transceiver unit to perform the method according to any one of claims 1 to 18.

20. A communication apparatus, comprising a processor and a memory, wherein

the memory is configured to store instructions; and
the processor is configured to execute the instructions, so that the method according to any one of claims 1 to 18 is performed.

21. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 18 is performed.

22. A computer-readable storage medium, wherein the computer-readable storage medium is configured to store a computer program, and when the computer program is executed, the method according to any one of claims 1 to 18 is performed.

80 MHz channel set: 80 MHz channel set
40 MHz channel set: 40 MHz channel set
Channel bandwidth: channel bandwidth
Primary 20 MHz: primary 20 MHz
Secondary 20 MHz: secondary 20 MHz

FIG. 1

FIG. 2

Frame: frame       Channel: channel
Busy: busy         Time: time
Presence of TX signal after puncturing: presence of TX signal after puncturing

Hidden layer/
Intermediate layer

Input
layer

Output
layer

FIG. 3

Input 1

Weight 1

Weight 2

Bias

Input 2

Sum

Activation
function

Output

Weight 3

Input 3

FIG. 4

FIG. 5a

FIG. 5b

EP 4 498 626 A1

Station STA

Physical layer
(PHY)

Medium access control
(MAC)

AI processing
module

FIG. 5c

Station STA

Physical layer
(PHY)

First medium access control
(MAC)

Second medium access control
(MAC)

AI processing module

FIG. 5d

49

FIG. 6

A first communication apparatus obtains input information of a neural network, where the neural network corresponds to an AI-assisted channel aggregation function, an AI-assisted channel aggregation joint channel access function, or an AI-assisted channel access function    S101

The first communication apparatus obtains a structure and a parameter of the neural network, and determines the neural network based on the structure and the parameter of the neural network    S102

The first communication apparatus obtains T observed datasets, and inputs the T datasets into the neural network for processing to obtain a channel aggregation decision result, a channel aggregation joint channel access decision result, or a channel access decision result    S103

FIG. 7

$(Q(Ch_0), \ldots, Q(Ch_{N-1}))$

$(o_1, a_1, I_1, \ldots, o_t,$
$a_t, I_t, \ldots, o_{T'}, a_{T'},$
$I_{T'}, load_0, load_1)$

| Input layer | | Hidden layer | | Output layer |

FC 32 → FC 32 → FC 32 → FC 32 → FC 32 → FC 32 → FC 32 → FC 32

FIG. 8

Total throughput/
Total throughput

AI

AlwaysMax

PrimaryOnly

Traffic load/Traffic load

FIG. 9

First communication apparatus

Second communication apparatus

S201: Send function request information, where the function request information is used to request to enable an AI-assisted channel aggregation function, an AI-assisted channel aggregation joint channel access function, or an AI-assisted channel access function

S202: Send function response information, where the function response information is used to respond to a request of the function request information

S203: Send a parameter of a neural network, where the parameter of the neural network includes at least one of a bias and a weight of a neuron

FIG. 10

| Element identifier element ID | Length length | Element identifier extension element ID extension | Function request |
|---|---|---|---|

| AI-channel access | AI-channel aggregation | Aggregation capability | Aggregatable channel number |
|---|---|---|---|

FIG. 11

| Control list control list | Padding Padding |
|---|---|

| Control Control | ... | Control Control |
|---|---|---|

| Control identifier Control ID | Control information Control information |
|---|---|

| Function request |
|---|

| AI-channel access | AI-channel aggregation | Aggregation capability | Aggregatable channel number |
|---|---|---|---|

FIG. 12

First
communication
apparatus

Second
communication
apparatus

S301: Generate a first frame, where the first
frame includes first indication information,
the first indication information indicates input
information of a neural network, and the
neural network corresponds to an AI-assisted
channel aggregation function, an AI-assisted
channel aggregation joint channel access
function, or an AI-assisted channel access
function

S302: Send the first frame

S303: Determine at least one of the input
information of the neural network and an
input layer structure of the neural network
based on an indication of the first indication
information in the first frame

FIG. 13

| Element identifier element ID | Length length | Element identifier extension element ID extension | Input-related indication |
| --- | --- | --- | --- |

| Basic observation indication basic observation indication | Extended observation indication extended observation indication | Basic observation basic observation | Extended observation extended observation | Number of basic observations number of basic observations | Number of extended observations number of extended observations |
| --- | --- | --- | --- | --- | --- |

| Carrier sense indication CS Ind | Action indication Act Ind | Duration indication Duration Ind | Acknowledgment indication ACK Ind | Queuing delay indication | Access delay indication |
| --- | --- | --- | --- | --- | --- |

| D2LT_0 Ind | D2LT_1 Ind | Load 0 indication Load_0 Ind | Load 1 indication Load_1 Ind |
| --- | --- | --- | --- |

FIG. 14

FIG. 15

```
┌──────────────────┐                    ┌──────────────────┐
│      First       │                    │      Second      │
│  communication   │                    │  communication   │
│    apparatus     │                    │    apparatus     │
└──────────────────┘                    └──────────────────┘
```

S401: Generate a second frame, where the second frame includes third indication information, the third indication information indicates at least one of an output layer structure of a neural network and a manner of selecting a decision result of the neural network, and the neural network corresponds to an AI-assisted channel aggregation function, an AI-assisted channel aggregation joint channel access function, or an AI-assisted channel access function

S402: Send the second frame

S403: Determine, based on an indication of the third indication information in the second frame, at least one of the output layer structure of the neural network and the manner of selecting the decision result of the neural network

FIG. 16

| Element identifier element ID | Length length | Element identifier extension element ID extension | Output information indication |
| --- | --- | --- | --- |

| Number of neurons number of neurons | Activation function activation function | Action selection mode act selection mode |
| --- | --- | --- |

FIG. 17

| Control list control list | Padding Padding |
|---|---|

| Control Control | ... | Control Control |
|---|---|---|

| Control identifier Control ID | Control information Control information |
|---|---|

| Output information indication |
|---|

| Number of neurons number of neurons | Activation function activation function | Action selection mode act selection mode |
|---|---|---|

FIG. 18

```
┌────────┐                                              ┌────────┐
│   AP   │                                              │  STA   │
└────────┘                                              └────────┘
```

S1: Send a function request frame, where the function request frame includes function request information, and the function request information is used to request to enable an AI-assisted channel aggregation function, an AI-assisted channel aggregation joint channel access function, or an AI-assisted channel access function

S2: Reply with a function response frame, where the function response frame includes function response information, and the function response information indicates that a request of the STA is agreed or rejected

S3: Send an input information indication frame, where the frame indicates input information of a neural network, and is further used to determine an input layer structure of the neural network

S4: Acknowledge the input information, for example, reply with an ACK or a BA

S5: Send an output information indication frame, where the frame is used to determine at least one of an output layer structure of the neural network and a manner of selecting a decision result of the neural network

S6: Acknowledge the output information, for example, reply with an ACK or a BA

S7: Deliver a parameter of the neural network

S8: Perform inference based on the received parameter of the neural network and data observed by the STA and corresponding to the input information to obtain a channel aggregation decision result, a channel aggregation joint channel access decision result, or a channel access decision result

FIG. 19

FIG. 20

FIG. 21

FIG. 22

## INTERNATIONAL SEARCH REPORT

| International application No. |
|---|
| **PCT/CN2023/085396** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT, CNKI, VEN, IEEE: 信道, 接入, 神经, 网络, 训练, 学习, 人工智能, 大数据, 深度, 协同, 协作, 帮助, 辅助, 开启, 打开, 关闭, 功能, 智能, channel, access, neural, network, training, learning, artificial, intelligence, deep, cooperation, help, auxiliary, close, start

### C. DOCUMENTS CONSIDERED TO BE RELEVANT

| Category* | Citation of document, with indication, where appropriate, of the relevant passages | Relevant to claim No. |
|---|---|---|
| X | CN 111669759 A (XI'AN JIAOTONG UNIVERSITY) 15 September 2020 (2020-09-15) description, paragraphs [0041]-[0089], and figures 1-2 | 1-22 |
| A | CN 113784359 A (KUNMING UNIVERSITY OF SCIENCE AND TECHNOLOGY) 10 December 2021 (2021-12-10) entire document | 1-22 |
| A | US 2018324595 A1 (BALL AEROSPACE & TECHNOLOGIES CORP.) 08 November 2018 (2018-11-08) entire document | 1-22 |
| A | 苗成林 等 (MIAO, Chenglin et al.). "基于隐马尔可夫模型的动态跳频信道接入算法 (Research on Dynamic Frequency Hopping Channel Access Algorithm Based on Hidden Markov Model)" 系统工程与电子技术 (Systems Engineering and Electronics), Vol. 41, No. 8, 31 August 2019 (2019-08-31), entire document | 1-22 |

☑ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 June 2023** | **21 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/085396**

| C. | DOCUMENTS CONSIDERED TO BE RELEVANT | |
|---|---|---|
| Category* | Citation of document, with indication, where appropriate, of the relevant passages | Relevant to claim No. |
| A | LI, Dongbo et al. "Stochastic Channel Modeling for Deep Neural Network-aided Sparse Code Multiple Access Communications"<br>*2021 IEEE 94th Vehicular Technology Conference (VTC2021-Fall),*<br>10 December 2021 (2021-12-10),<br>    entire document | 1-22 |

Form PCT/ISA/210 (second sheet) (July 2022)

INTERNATIONAL SEARCH REPORT
Information on patent family members

International application No.

**PCT/CN2023/085396**

| Patent document cited in search report | | | Publication date (day/month/year) | Patent family member(s) | | | Publication date (day/month/year) |
|---|---|---|---|---|---|---|---|
| CN | 111669759 | A | 15 September 2020 | None | | | |
| CN | 113784359 | A | 10 December 2021 | None | | | |
| US | 2018324595 | A1 | 08 November 2018 | WO | 2018204917 | A1 | 08 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210356208